# EUROPEAN PATENT APPLICATION

(11) **EP 4 335 707 A1**
(43) Date of publication of application: **13.03.2024**
(21) Application number: 23186120.4
(22) Date of filing: 28.07.2017
(51) Int. Cl.: B60T 8/48, B60T 13/74, F16H 25/22, F16H 25/20

(54) **VEHICLE BRAKE SYSTEM HAVING PLUNGER POWER SOURCE**

(30) Priority: 28.07.2016 US 201615221648
(62) Divisional of application: 17835395.9
(71) Applicant: ZF Active Safety US Inc., Livonia, MI 48150 (US)
(72) Inventor: GANZEL, J. Blaise, Livonia MI 48150 (US); MALWITZ, Daniel Ryan, Livonia MI 48150 (US); CAMPAU, Gregory P., Livonia MI 48150 (US); STARR, Joseph, Livonia MI 48150 (US); CASSIDY, John, Livonia MI 48150 (US); CALDWELL, William, Livonia MI 48150 (US); BRANHAM, Ralf, Livonia MI 48150 (US); FERGUSON, Tim, Livonia MI 48150 (US)
(74) Representative: ZF Friedrichshafen AG

(57) **Abstract**

The invention relates to an improved plunger assembly for a vehicle brake system. The plunger assembly is operable as a pressure source to control brake fluid pressure supplied to one or more wheel brakes. The plunger assembly comprises a housing defining a cylinder; a reversible motor supported by the housing and having a rotor; and a linear actuator such as a ball screw/nut mechanism driven by the motor. A plunger head is mounted in the cylinder and driven by the linear actuator in first and second opposite directions. Improvements include an elastomeric tubular torque coupler connected to a ball screw/nut anti-rotation member; and a clamped connection at an inner race of a motor bearing for securing the rotor to the ball screw/nut component.

## Description

### BACKGROUND OF THE INVENTION

This invention relates in general to vehicle braking systems. Vehicles are commonly slowed and stopped with hydraulic brake systems. These systems vary in complexity but a base brake system typically includes a brake pedal, a tandem master cylinder, fluid conduits arranged in two similar but separate brake circuits, and wheel brakes in each circuit. The driver of the vehicle operates a brake pedal which is connected to the master cylinder. When the brake pedal is depressed, the master cylinder generates hydraulic forces in both brake circuits by pressurizing brake fluid. The pressurized fluid travels through the fluid conduit in both circuits to actuate brake cylinders at the wheels to slow the vehicle.

Base brake systems typically use a brake booster which provides a force to the master cylinder which assists the pedal force created by the driver. The booster can be vacuum or hydraulically operated. A typical hydraulic booster senses the movement of the brake pedal and generates pressurized fluid which is introduced into the master cylinder. The fluid from the booster assists the pedal force acting on the pistons of the master cylinder which generate pressurized fluid in the conduit in fluid communication with the wheel brakes. Thus, the pressures generated by the master cylinder are increased. Hydraulic boosters are commonly located adjacent the master cylinder piston and use a boost valve to control the pressurized fluid applied to the booster.

Braking a vehicle in a controlled manner under adverse conditions requires precise application of the brakes by the driver. Under these conditions, a driver can easily apply excessive braking pressure thus causing one or more wheels to lock, resulting in excessive slippage between the wheel and road surface. Such wheel lock-up conditions can lead to greater stopping distances and possible loss of directional control.

Advances in braking technology have led to the introduction of Anti-lock Braking Systems (ABS). An ABS system monitors wheel rotational behavior and selectively applies and relieves brake pressure in the corresponding wheel brakes in order to maintain the wheel speed within a selected slip range to achieve maximum braking force. While such systems are typically adapted to control the braking of each braked wheel of the vehicle, some systems have been developed for controlling the braking of only a portion of the plurality of braked wheels.

Electronically controlled ABS valves, comprising apply valves and dump valves, are located between the master cylinder and the wheel brakes. The ABS valves regulate the pressure between the master cylinder and the wheel brakes. Typically, when activated, these ABS valves operate in three pressure control modes: pressure apply, pressure dump and pressure hold. The apply valves allow pressurized brake fluid into respective ones of the wheel brakes to increase pressure during the apply mode, and the dump valves relieve brake fluid from their associated wheel brakes during the dump mode. Wheel brake pressure is held constant during the hold mode by closing both the apply valves and the dump valves.

To achieve maximum braking forces while maintaining vehicle stability, it is desirable to achieve optimum slip levels at the wheels of both the front and rear axles. During vehicle deceleration different braking forces are required at the front and rear axles to reach the desired slip levels. Therefore, the brake pressures should be proportioned between the front and rear brakes to achieve the highest braking forces at each axle. ABS systems with such ability, known as Dynamic Rear Proportioning (DRP) systems, use the ABS valves to separately control the braking pressures on the front and rear wheels to dynamically achieve optimum braking performance at the front and rear axles under the then current conditions.

A further development in braking technology has led to the introduction of Traction Control (TC) systems. Typically, valves have been added to existing ABS systems to provide a brake system which controls wheel speed during acceleration. Excessive wheel speed during vehicle acceleration leads to wheel slippage and a loss of traction. An electronic control system senses this condition and automatically applies braking pressure to the wheel cylinders of the slipping wheel to reduce the slippage and increase the traction available. In order to achieve optimal vehicle acceleration, pressurized brake fluid is made available to the wheel cylinders even if the master cylinder is not actuated by the driver.

During vehicle motion such as cornering, dynamic forces are generated which can reduce vehicle stability. A Vehicle Stability Control (VSC) brake system improves the stability of the vehicle by counteracting these forces through selective brake actuation. These forces and other vehicle parameters are detected by sensors which signal an electronic control unit. The electronic control unit automatically operates pressure control devices to regulate the amount of hydraulic pressure applied to specific individual wheel brakes. In order to achieve optimal vehicle stability, braking pressures greater than the master cylinder pressure must quickly be available at all times.

Brake systems may also be used for regenerative braking to recapture energy. An electromagnetic force of an electric motor/generator is used in regenerative braking for providing a portion of the braking torque to the vehicle to meet the braking needs of the vehicle. A control module in the brake system communicates with a powertrain control module to provide coordinated braking during regenerative braking as well as braking for wheel lock and skid conditions. For example, as the operator of the vehicle begins to brake during regenerative braking, electromagnet energy of the motor/generator will be used to apply braking torque (i.e., electromagnetic resistance for providing torque to the powertrain) to the vehicle. If it is determined that there is no longer a sufficient amount of storage means to store energy recovered from the regenerative braking or if the regenerative braking cannot meet the demands of the operator, hydraulic braking will be activated to complete all or part of the braking action demanded by the operator. Preferably, the hydraulic braking operates in a regenerative brake blending manner so that the blending is effectively and unnoticeably picked up where the electromagnetic braking left off. It is desired that the vehicle movement should have a smooth transitional change to the hydraulic braking such that the changeover goes unnoticed by the driver of the vehicle.

Plunger assemblies are generally known in the art, as it is disclosed in US 5 667 283 A, US 2013/076115 A1 and WO 2016/049653 A1.

### SUMMARY OF THE INVENTION

The invention concerns an improved plunger assembly for a vehicle brake system. The plunger assembly is operable as a pressure source to control brake fluid pressure supplied to one or more wheel brakes. The plunger assembly comprises a housing defining a cylinder having a first port; a reversible motor supported by the housing and having a rotor; and a linear actuator driven by the motor. The linear actuator includes a ball screw mechanism having a screw and a nut, with one of the screw and the nut defining a rotatable component connected to the motor rotor, and the other one of the screw and the nut defining a translatable component. The plunger assembly also includes an anti-rotation member coupled to the translatable component to allow translation and resist rotation of the translatable component within the housing. A plunger head is mounted in the cylinder and driven by the translatable component in first and second opposite directions. The plunger head cooperates with the cylinder to define a first chamber containing brake fluid received from a fluid reservoir, and the first chamber is hydraulically connected to the wheel brakes via the first port. In at least one operating mode, fluid pressure in the first chamber is increased when the plunger head is moved in the first direction and is decreased when the plunger head is moved in the second direction.

According to one aspect of the invention, an elastomeric tubular torque coupler is provided for supporting the anti-rotation member relative to the housing for limited rotational movement. The torque coupler provides limited rotational movement by torsional shear deflection. The torque coupler may be provided with a metal attachment ring at each end to fix the torque coupler to the housing and anti-rotation member. Preferably, the torque coupler is constructed of EPDM.

According to another aspect of the invention, the anti-rotation member is provided with a first stop member circumferentially spaced from a cooperating second stop member fixed relative to the housing. In the event of a failed torque coupler, or in the event of rotation of the anti-rotation member above a predetermined limit, the first and second stop members engage to prevent further rotation of the anti-rotation member.

According to another aspect of the invention, the anti-rotation member defines the full length of travel of the translatable component and is configured to support the translatable component over the full length of travel.

According to another aspect of the invention, a clamped connection is provided at an inner race of the bearing for securing the rotor to the rotatable component. The clamped connection may include a washer having a tapered aperture and a threaded fastener have tapered head and a threaded portion extending from the tapered head, with the mating tapered aperture and tapered head defining a taper interface, and the taper interface establishing an initial contact point proximate the threaded portion and a gap at a distal end of the tapered head. Also, the rotor defines a tapered aperture and the rotatable component defines a complementary tapered extension and wherein the clamped connection engages the extension within the aperture to create a frictional torque transmitting connection. The rotor further defines a second aperture that is concentric with the tapered aperture and defines a torque transmitting profile, and the rotatable component has a mating torque transmitting profile configured to provide a secondary torque transmission path between the rotor and the rotatable component. Generally, the clamped connection includes a washer engaging one side of the inner race, the rotor engages the opposite side of the inner race, and a threaded faster extends through the washer and is tightened into a threaded bore in the rotatable component to clamp the rotor to the inner race.

According to another aspect of the invention, the plunger head seal includes an outer sealing ring radially biased against an inner cylinder wall for radially positioning the plunger head within the cylinder. Preferably, an elastomeric inner sealing ring is located in an outer groove on the plunger head for radially biasing the outer sealing ring against the cylindrical wall. The outer diameter of the plunger head on one side of the outer groove is reduced to facilitate installation of the outer sealing ring. Preferably, the outer sealing ring is constructed of a PTFE.

According to a further aspect of the invention, the cylinder projects from one side of a housing block, and an end cap covers the projecting end of the cylinder and is secured to the housing block in a generally coaxial relationship with the cylinder. The cylinder and the end cap cooperate to define a fluid passageway between the end of the cylinder and at least one fluid passageway provided in the housing block.

Various aspects of this invention will become apparent to those skilled in the art from the following detailed description of the preferred embodiment, when read in light of the accompanying drawings.

### BRIEF DESCRIPTION OF THE DRAWINGS

Fig. 1 is a schematic illustration of a first embodiment of a prior art brake system.
Fig. 2 is an enlarged schematic sectional view of the brake pedal unit assembly of the prior art brake system of Fig. 1 shown in its rest position.
Fig. 3 is an enlarged schematic sectional view of the plunger assembly of the prior art brake system of Fig. 1 shown in a rest position.
Fig. 4 is an alternate embodiment of a prior art plunger assembly which may be used in the prior art brake system of Fig. 1.
Fig. 5 is a schematic illustration of a second embodiment of a prior art brake system.
Fig. 6 is an alternate embodiment of a prior art plunger assembly which may be used in the prior art brake system of Fig. 5.
Fig. 7 is a schematic illustration of a third embodiment of a prior art brake system.
Fig. 8 is a schematic illustration of a fourth embodiment of a prior art brake system.
Fig. 9 is a schematic illustration of a fifth embodiment of a prior art brake system.
Fig. 10 is a schematic illustration of a sixth embodiment of a prior art brake system.
Fig. 11 is a schematic illustration of a first embodiment of a plunger assembly in accordance with the invention.
Fig. 12 is a schematic illustration, in a partially exploded view, of a portion of the plunger assembly of Fig. 11.
Fig. 13 is a perspective view of a second embodiment of a plunger assembly.
Fig. 14 is a perspective view of an opposite side of the plunger assembly of Fig. 13.
Fig. 15 is an exploded perspective view of the plunger assembly of Figs. 12 and 13.
Fig. 16 is an elevational view, in cross section, of the plunger assembly of Fig. 12.
Fig. 17 is an enlarged elevational view, in cross section, of a connection of the plunger assembly of Fig. 16.
Fig. 18 is an enlarged view, in cross section, of the connection of the plunger assembly of Fig. 17, taken at 18-18.
Fig. 19 is a perspective view, in cross section, of the motor and ball screw sub assembly of the plunger assembly of Fig. 16.
Fig. 20 is an exploded, perspective view of the motor and ball screw sub assembly of Fig. 19.
Fig. 21 is a partially exploded, perspective view of the motor and ball screw sub assembly of Fig. 19.
Fig. 22 is an enlarged, cross sectional view of a ball screw assembly of Fig. 17.
Fig. 23 is an exploded, perspective view of a ball screw assembly and support structure.
Fig. 24 is a partially exploded, perspective view of the ball screw and support structure assembly of Fig. 23 and the plunger housing.
Fig. 25 is an assembled view of the ball screw and support structure assembly and the plunger housing of Fig. 24.
Fig. 26 is an enlarged view, in cross section, of a plunger head and cylinder.
Fig. 27 is an exploded view of a plunger head and ball screw assembly.
Fig. 28 is a perspective view, in cross section, of the plunger and housing assembly.
Fig. 29 is an exploded view of an anti-rotation tube, plunger cylinder sleeve, and end cap sub assembly.
Fig. 30 is an enlarged, cross sectional view of the anti-rotation tube, plunger cylinder sleeve, and end cap sub assembly of Fig. 29.

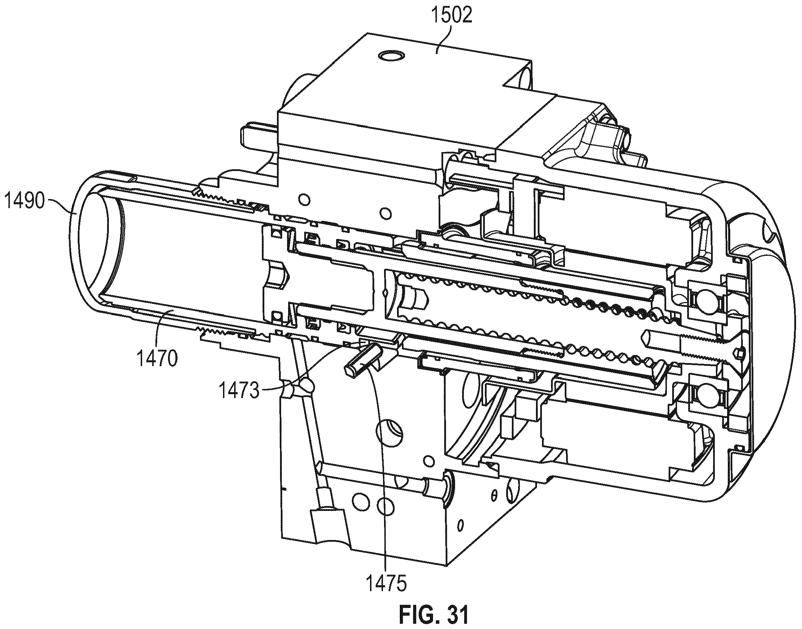

Fig. 31 is a perspective view, in cross section, of the plunger assembly of Fig. 14.
Fig. 32 is a perspective view, in cross section, of the plunger assembly of Fig. 13.

### DETAILED DESCRIPTION OF THE PREFERRED EMBODIMENT

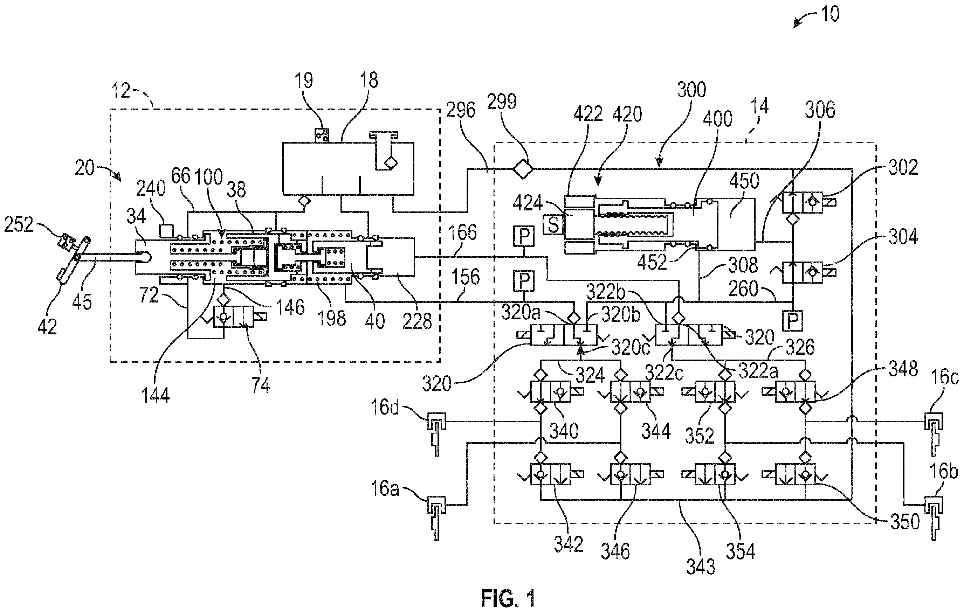

Referring now to the drawings, there is schematically illustrated in Fig. 1 a first embodiment of a vehicle brake system, indicated generally at 10. The brake system 10 is a hydraulic boost braking system in which boosted fluid pressure is utilized to apply braking forces for the brake system 10. The brake system 10 may suitably be used on a ground vehicle such as an automotive vehicle having four wheels with a wheel brake associated with each wheel. Furthermore, the brake system 10 can be provided with other braking functions such as anti-lock braking (ABS) and other slip control features to effectively brake the vehicle, as will be discussed below.

The brake system 10 generally includes a first block or brake pedal unit assembly, indicated by broken lines 12, and a second block or hydraulic control unit, indicated by broken lines 14. The various components of the brake system 10 are housed in the brake pedal unit assembly 12 and the hydraulic control unit 14. The brake pedal unit assembly 12 and the hydraulic control unit 14 may include one or more blocks or housings made from a solid material, such as aluminum, that has been drilled, machined, or otherwise formed to house the various components. Fluid conduits may also be formed in the housings to provide fluid passageways between the various components. The housings of the brake pedal unit assembly 12 and the hydraulic control unit 14 may be single structures or may be made of two or more parts assembled together. As schematically shown, the hydraulic control unit 14 is located remotely from the brake pedal unit assembly 12 with hydraulic lines hydraulically coupling the brake pedal unit assembly 12 and the hydraulic control unit 14. Alternatively, the brake pedal unit assembly 12 and the hydraulic control unit 14 may be housed in a single housing. It should also be understood that the grouping of components as illustrated in Fig. 1 is not intended to be limiting and any number of components may be housed in either of the housings.

The brake pedal unit assembly 12 cooperatively acts with the hydraulic control unit 14 for actuating wheel brakes 16a, 16b, 16c, and 16d. The wheel brakes 16a, 16b, 16c, and 16d can be any suitable wheel brake structure operated by the application of pressurized brake fluid. The wheel brake 16a, 16b, 16c, and 16d may include, for example, a brake caliper mounted on the vehicle to engage a frictional element (such as a brake disc) that rotates with a vehicle wheel to effect braking of the associated vehicle wheel. The wheel brakes 16a, 16b, 16c, and 16d can be associated with any combination of front and rear wheels of the vehicle in which the brake system 10 is installed. For example, for a vertically split system, the wheel brakes 16a and 16d may be associated with the wheels on the same axle. For a diagonally split brake system, the wheel brakes 16a and 16b may be associated with the front wheel brakes.

The brake pedal unit assembly 12 includes a fluid reservoir 18 for storing and holding hydraulic fluid for the brake system 10. The fluid within the reservoir 18 may be held generally at atmospheric pressure or can store the fluid at other pressures if so desired. The brake system 10 may include a fluid level sensor 19 for detecting the fluid level of the reservoir. The fluid level sensor 19 may be helpful in determining whether a leak has occurred in the system 10.

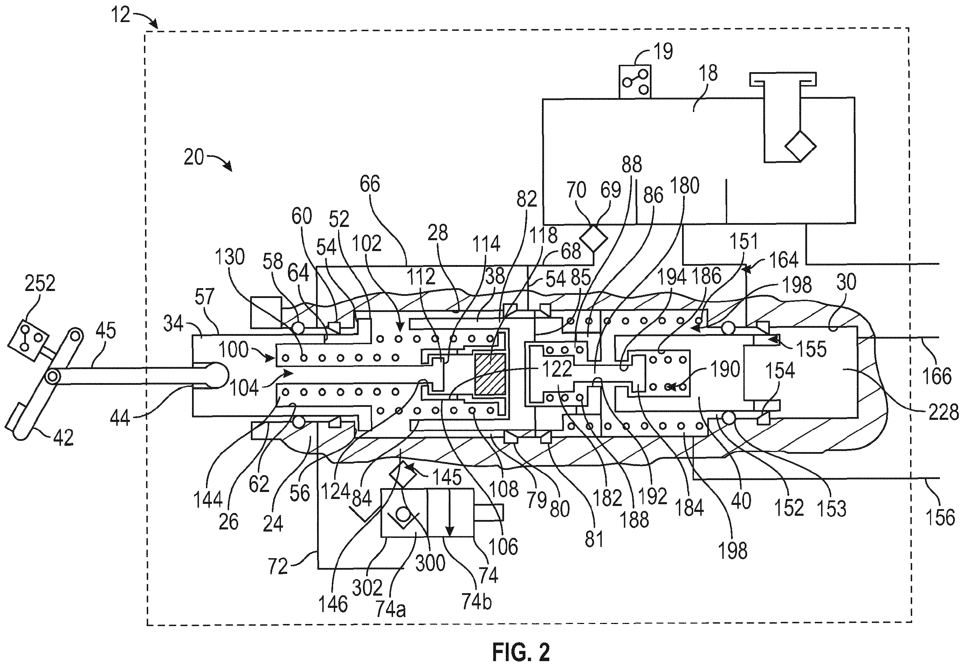

The brake pedal control unit assembly 12 includes a brake pedal unit (BPU), indicated generally at 20. The brake pedal unit 20 is also schematically shown enlarged in Fig. 2. It should be understood that the structural details of the components of the brake pedal unit 20 illustrate only one example of a brake pedal unit 20. The brake pedal unit 20 could be configured differently having different components than that shown in Figs. 1 and 2.

The brake pedal unit 20 includes a housing 24 (shown broken away in Fig. 2) having various bores formed in for slidably receiving various cylindrical pistons and other components therein. The housing 24 may be formed as a single unit or include two or more separately formed portions coupled together. The housing 24 generally includes a first bore 26, an intermediate second bore 28, and a third bore 30. The second bore 28 has a larger diameter than the first bore 26 and the third bore 30. The brake pedal unit 20 further includes an input piston 34, a primary piston 38, and a secondary piston 40. The input piston 34 is slidably disposed in the first bore 26. The primary piston 38 is slidably disposed in the second bore 28. The secondary piston 40 is slidably disposed in the third bore 30.

A brake pedal, indicated schematically at 42 in Figs. 1 and 2, is coupled to a first end 44 of the input piston 34 via an input rod 45. The input rod 45 can be coupled directly to the input piston 34 or can be indirectly connected through a coupler (not shown). The input piston 34 includes an enlarged second end 52 that defines a shoulder 54. In the rest position shown in Figs. 1 and 2, the shoulder 54 of the input piston engages with a shoulder 56 formed between the first and second bores 26 and 28 of the housing 24. An outer cylindrical surface 57 of the input piston 34 is engaged with a seal 58 and a lip seal 60 mounted in grooves formed in the housing 24. The outer cylindrical surface 57 may be continuous along its length or it may be stepped having two or more different diameter portions. The input piston 34 includes a central bore 62 formed through the second end 52. One or more lateral passageways 64 are formed through the input piston 34. The lateral passageways 64 extend from the outer cylindrical surface 57 to the central bore 62 to provide fluid communication therebetween. The brake pedal unit 20 is in a "rest" position as shown in Figs. 1 and 2. In the "rest" position, the pedal 42 has not been depressed by the driver of the vehicle. In the rest position, the passageways 64 of the input piston 34 are between the seals 58 and 60. In this position, the passageways 64 are in fluid communication with a conduit 66 formed though the housing 24. The conduit 66 is in fluid communication with a conduit 68 formed in the housing 24. The conduit 68 is in fluid communication with a reservoir port 70 connected to the reservoir 18. A filter 69 may be disposed in the port 70 or the conduit 68. The conduits 66 and 68 can be formed by various bores, grooves and passageways formed in the housing 24. In the rest position, the passageways 64 are also in fluid communication with a conduit 72 formed in the housing 24 which leads to a simulation valve 74. The simulation valve 74 may be a cut off valve which may be electrically operated. The simulation valve 74 may be mounted in the housing 24 or may be remotely located therefrom

The primary piston 38 is slidably disposed in the second bore 28 of the housing 24. An outer wall 79 of the primary piston 38 is engaged with a lip seal 80 and a lip seal 81 mounted in grooves formed in the housing 24. The primary piston 38 includes a first end 82 having a cavity 84 formed therein. A second end 86 of the primary piston 38 includes a cavity 88 formed therein. One or more passageways 85 are formed in the primary piston 38 which extend from the cavity 88 to the outer wall of the primary piston 38. As shown in Fig. 2, the passageway 85 is located between the lip seals 80 and 81 when the primary piston 38 is in its rest position. For reasons which will be explained below, the passageway 85 is in selective fluid communication with a conduit 154 which is in fluid communication with the reservoir 18.

The central bore 62 of the input piston 34 and the cavity 84 of the primary piston 38 house various components defining a pedal simulator, indicated generally at 100. A caged spring assembly, indicated generally at 102, is defined by a pin 104, a retainer 106, and a low rate simulator spring 108. The pin 104 is shown schematically as being part of the input piston 34 and disposed in the central bore 62. The pin 104 could be configured as a pin having a first end which is press fit or threadably engaged with the input piston 34. The pin 104 extends axially within the central bore 62 and into the cavity 84 of the primary piston 38. A second end 112 of the pin 104 includes a circular flange 114 extending radially outwardly therefrom. The second end 112 is spaced from an elastomeric pad 118 disposed in the cavity 84. The elastomeric pad 118 is axially aligned with the second end 112 of the pin 104, the reason for which will be explained below. The retainer 106 of the caged spring assembly 102 includes a stepped through bore 122. The stepped through bore 122 defines a shoulder 124. The second end 112 of the pin 104 extends through the through bore 122. The flange 114 of the pin 104 engages with the shoulder 124 of the retainer 106 to prevent the pin 104 and the retainer 106 from separating from each other. One end of the low rate simulator spring 108 engages with the second end 52 of the input piston 34, and the other end of the low rate simulator spring 108 engages with the retainer 106 to bias the retainer 106 in a direction away from the pin 104.

The pedal simulator 100 further includes a high rate simulator spring 130 which is disposed about the pin 104. The terms low rate and high rate are used for description purposes and are not intended to be limiting. It should be understood that that the various springs of the pedal simulator 100 may have any suitable spring coefficient or spring rate. In the illustrated embodiment, the high rate simulator spring 130 preferably has a higher spring rate than the low rate simulator spring 108. One end of the high rate simulator spring 130 engages with the bottom of the central bore 62 of the input piston 34. The other end of the high rate simulator spring 130 is shown in Fig. 2 in a non-engaged position and spaced away from an end of the retainer 106. The housing 24, the input piston 34 (and its seals), and the primary piston 38 (and its seals) generally define a fluid simulation chamber 144. The simulation chamber 144 is in fluid communication with a conduit 146 which is in fluid communication with the simulation valve 74. A filter 145 may be housed within the conduit 146.

As discussed above, the brake pedal unit 20 includes the primary and secondary pistons 38 and 40 that are disposed in the second and third bores 28 and 32, respectively, which are formed in the housing 24. The primary and secondary pistons 38 and 40 are generally coaxial with one another. A primary output conduit 156 is formed in the housing 24 and is in fluid communication with the second bore 28. The primary output conduit 156 may be extended via external piping or a hose connected to the housing 24. A secondary output conduit 166 is formed in the housing 24 and is in fluid communication with the third bore 30. The secondary output conduit 166 may be extended via external piping or a hose connected to the housing 24. As will be discussed in detail below, rightward movement of the primary and secondary pistons 38 and 40, as viewing Figs. 1 and 2, provides pressurized fluid out through the conduits 156 and 166, respectively. A return spring 151 is housed in the second bore 28 and biases the primary piston 38 in the leftward direction.

The secondary piston 40 is slidably disposed in the third bore 30. An outer wall 152 of the secondary piston is engaged with a lip seal 153 and a lip seal 154 mounted in grooves formed in the housing 24. A secondary pressure chamber 228 is generally defined by the third bore 30, the secondary piston 40, and the lip seal 154. Rightward movement of the secondary piston 40, as viewing Figs. 1 and 2, causes a buildup of pressure in the secondary pressure chamber 228. The secondary pressure chamber 228 is in fluid communication with the secondary output conduit 166 such that pressurized fluid is selectively provided to the hydraulic control unit 14. One or more passageways 155 are formed in the secondary piston 40. The passageway 155 extends between the outer wall of the primary piston 38 and a right-hand end of the secondary piston 40. As shown in Fig. 2, the passageway 155 is located between the seal 153 and the lip seal 154 when the secondary piston 40 is in its rest position, the reason for which will be explained below. For reasons which will be explained below, the passageway 155 is in selective fluid communication with a conduit 164 which is in fluid communication with the reservoir 18.

A primary pressure chamber 198 is generally defined by the second bore 28, the primary piston 38, the secondary piston 40, the lip seal 81, and the seal 153. Although the various seals shown in the drawings are schematically represented as O-ring or lip seals, it should be understood that they can have any configuration. Rightward movement of the primary piston 38, as viewing Figs. 1 and 2, causes a buildup of pressure in the primary pressure chamber 198. The primary pressure chamber 198 is in fluid communication with the primary output conduit 156 such that pressurized fluid is selectively provided to the hydraulic control unit 14.

The primary and secondary pistons 38 and 40 may be mechanically connected together such that there is limited play or movement between the pistons 38 and 40. This type of connection permits the primary and secondary pistons 38 and 40 to move relative to one another by relatively small increments to compensate for pressure and/or volume differences in their respective output circuits. However, under certain failure modes it is desirable that the secondary piston 40 is connected to the primary piston 38. For example, if the brake system 10 is under a manual push through mode, as will be explained in detail below, and additionally fluid pressure is lost in the output circuit relative to the secondary piston 40, such as for example, in the conduit 166, the secondary piston 40 will be forced or biased in the rightward direction due to the pressure within the primary chamber 1798. If the primary and secondary pistons 38 and 40 were not connected together, the secondary piston 40 would freely travel to its further most right-hand position, as viewing Figs. 1 and 2, and the driver would have to depress the pedal 42 a distance to compensate for this loss in travel. However, because the primary and secondary pistons 38 and 40 are connected together, the secondary piston 40 is prevented from this movement and relatively little loss of travel occurs in this type of failure.

The primary and secondary pistons 38 and 40 can be connected together by any suitable manner. For example, as schematically shown in Figs. 1 and 2, a locking member 180 is disposed and trapped between the primary and secondary pistons 38 and 40. The locking member 180 includes a first end 182 and a second end 184. The first end 182 is trapped within the cavity 88 of the second end 86 of the primary piston 38.
The second end 184 of the locking member 180 is trapped within a recess or cavity 186 formed in the secondary piston 40. The first and second ends 182 and 184 may include enlarged head portions which are trapped behind narrower openings 192 and 194 of the cavities 88 and 186, respectively. A first spring 188 is housed within the cavity 88 of the primary piston 38 and biases the locking member 180 in a direction towards the primary piston 38 and away from the secondary piston 40. A second spring 190 is housed within the cavity 186 of the secondary piston 40 and biases the locking member 180 in a direction towards the primary piston 38 and away from the secondary piston 40. The springs 188 and 190 and the locking member 180 maintain the first and second output piston at a spaced apart distance from one another while permitting limited movement towards and away from each other by compression of the springs 188 or 190. This limited play mechanical connection permits the primary and secondary pistons 38 and 40 to move relative to one another by small increments to compensate for pressure and/or volume differences in their respective output circuits.

Referring back to Fig. 1, the system 10 may further include a travel sensor, schematically shown at 240 in Fig. 1, for producing a signal that is indicative of the length of travel of the input piston 34 which is indicative of the pedal travel. The system 10 may also include a switch 252 for producing a signal for actuation of a brake light and to provide a signal indicative of movement of the input piston 34. The brake system 10 may further include sensors such as pressure transducers 257 and 259 for monitoring the pressure in the conduits 156 and 166, respectively.

The system 10 further includes a source of pressure in the form of a plunger assembly, indicated generally at 300. As will be explained in detail below, the system 10 uses the plunger assembly 300 to provide a desired pressure level to the wheel brakes 16a-d during a normal boosted brake apply. Fluid from the wheel brakes 16a-d may be returned to the plunger assembly 300 or diverted to the reservoir 18.

The system 10 further includes a first isolation valve 320 and a second isolation valve 322 (or referred to as switching valves or base brake valves). The isolation valves 320 and 322 may be solenoid actuated three way valves. The isolation valves 320 and 322 are generally operable to two positions, as schematically shown in
Fig. 1. The first isolation valve 320 has a port 320a in selective fluid communication with the primary output conduit 156 which is in fluid communication with the first output pressure chamber 198. A port 320b is in selective fluid communication with a boost conduit 260. A port 320c is in fluid communication with a conduit 324 which is selectively in fluid communication with the wheel brakes 16a and 16d. The second isolation valve 322 has a port 322a in selective fluid communication with the conduit 166 which is in fluid communication with the second output pressure chamber 228. A port 322b is in selective fluid communication with the boost conduit 260. A port 322c is in fluid communication with a conduit 326 which is selectively in fluid communication with the wheel brakes 16b and 16c.

The system 10 further includes various valves (slip control valve arrangement) for permitting controlled braking operations, such as ABS, traction control, vehicle stability control, and regenerative braking blending. A first set of valves includes an apply valve 340 and a dump valve 342 in fluid communication with the conduit 324 for cooperatively supplying brake fluid received from the boost valves to the wheel brake 16d, and for cooperatively relieving pressurized brake fluid from the wheel brake 16d to a reservoir conduit 343 in fluid communication with the reservoir conduit 296. A second set of valves include an apply valve 344 and a dump valve 346 in fluid communication with the conduit 324 for cooperatively supplying brake fluid received from the boost valves to the wheel brake 16a, and for cooperatively relieving pressurized brake fluid from the wheel brake 16a to the reservoir conduit 343. A third set of valves include an apply valve 348 and a dump valve 350 in fluid communication with the conduit 326 for cooperatively supplying brake fluid received from the boost valves to the wheel brake 16c, and for cooperatively relieving pressurized brake fluid from the wheel brake 16c to the reservoir conduit 343. A fourth set of valves include an apply valve 352 and a dump valve 354 in fluid communication with the conduit 326 for cooperatively supplying brake fluid received from the boost valves to the wheel brake 16d, and for cooperatively relieving pressurized brake fluid from the wheel brake 16d to the reservoir conduit 343.

As stated above, the system 10 includes a source of pressure in the form of the plunger assembly 300 to provide a desired pressure level to the wheel brakes 16a-d. The system 10 further includes a venting valve 302 and a pumping valve 304 which cooperate with the plunger assembly 300 to provide boost pressure to the boost conduit 260 for actuation of the wheel brakes 16a-d. The venting valve 302 and the pumping valve 304 may be solenoid actuated valves movable between open positions and closed positions. In the closed positions, the venting valve 302 and the pumping valve 304 may still permit flow in one direction as schematically shown as a check valve in Fig. 1. The venting valve 302 is in fluid communication with the reservoir conduit 296 and a first output conduit 306 in fluid communication with the plunger assembly 300. A second output conduit 308 is in fluid communication between the plunger assembly 300 and the boost conduit 260.

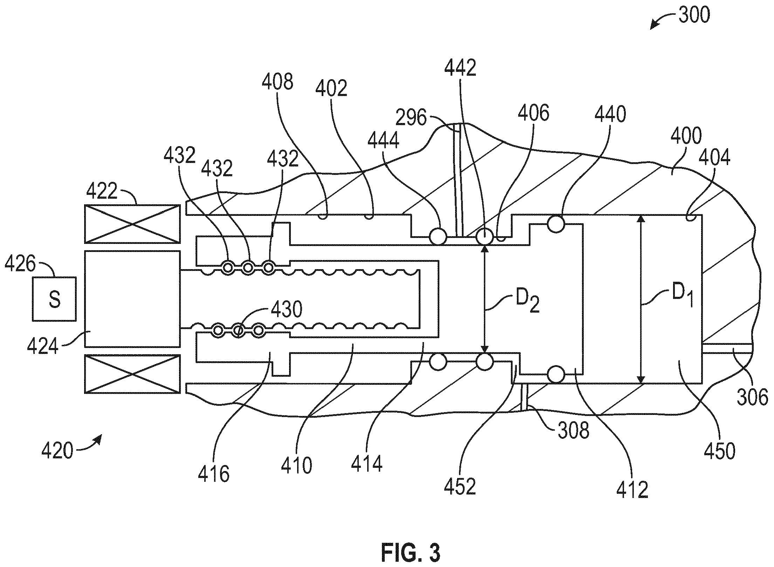

As best shown in Fig. 3, the plunger assembly 300 includes a housing 400 having a multi-stepped bore 402 formed therein. The bore 402 includes a first portion 404, a second portion 406, and third portion 408. A piston 410 is slidably disposed with the bore 402. The piston 410 includes an enlarged end portion 412 connected to a smaller diameter central portion 414. The piston 410 has a second end 416 connected to a ball screw mechanism, indicated generally at 420. The ball screw mechanism 420 is provided to impart translational or linear motion of the piston 410 along an axis defined by the bore 402 in both a forward direction (rightward as viewing Figs. 1 and 3), and a rearward direction (leftward as viewing Figs. 1 and 3) within the bore 402 of the housing 400. In the embodiment shown, the ball screw mechanism 420 includes a motor 422 rotatably driving a screw shaft 424. The motor 422 may include a sensor 426 for detecting the rotational position of the motor 422 and/or ball screw mechanism 420 which is indicative of the position of the piston 410. The second end 416 of the piston 410 includes a threaded bore 430 and functions as a driven nut of the ball screw mechanism 420. The ball screw mechanism 420 includes a plurality of balls 432 that are retained within helical raceways formed in the screw shaft 424 and the threaded bore 430 of the piston 410 to reduce friction. Although a ball screw mechanism 420 is shown and described with respect to the plunger assembly 300, it should be understood that other suitable mechanical linear actuators may be used for imparting movement of the piston 410. It should also be understood that although the piston 410 functions as the nut of the ball screw mechanism 420, the piston 410 could be configured to function as a screw shaft of the ball screw mechanism 420. Of course, under this circumstance, the screw shaft 424 would be configured to function as a nut having internal helical raceways formed therein.

As will be discussed in detail below, the plunger assembly 300 can provide boosted pressure to the boost conduit 260 when actuated in both the forward and rearward directions. The plunger assembly 300 includes a seal 440 mounted on the enlarged end portion 412 of the piston 410. The seal 440 slidably engages with the inner cylindrical surface of the first portion 404 of the bore 2 as the piston 410 moves within the bore 402. A pair of seals 442 and 444 is mounted in grooves formed in the second portion 406 of the bore 402. The seals 442 and 444 slidably engage with the outer cylindrical surface of the central portion 414 of the piston 410. A first pressure chamber 450 is generally defined by the first portion 404 of the bore 402, the enlarged end portion 412 of the piston 410, and the seal 440. A second pressure chamber 452, located generally behind the enlarged end portion 412 of the piston 410, is generally defined by the first and second portions 404 and 406 of the bore 402, the seals 442 and 444, and the central portion 414 of the piston 410. The seals 440, 442, and 44 can have any suitable seal structure.

As stated above, the brake pedal unit assembly 12 includes a simulation valve 74 which may be mounted in the housing 24 or remotely from the housing 24. As schematically shown in Figs. 1 and 2, the simulation valve 74 may be a solenoid actuated valve. The simulation valve 74 includes a first port 75 and a second port 77. The port 75 is in fluid communication with the conduit 146 which is in fluid communication with the simulation chamber 144. The port 77 is in fluid communication with the conduit 72 which is in fluid communication with the reservoir 18 via the conduits 66 and 68. The simulation valve 74 is movable between a first position 74a restricting the flow of fluid from the simulation chamber 144 to the reservoir 18, and a second position 74b permitting the flow of fluid between the reservoir 18 and the simulation chamber 144.
The simulation valve 74 is in the first position or normally closed position when not actuated such that fluid is prevented from flowing out of the simulation chamber 144 through conduit 72, as will be explained in detail below.

The following is a description of the operation of the brake system 10.
Figs. 1 and 2 illustrate the brake system 10 and the brake pedal unit 20 in the rest position. In this condition, the driver is not depressing the brake pedal 42. Also in the rest condition, the simulation valve 74 may be energized or not energized. During a typical braking condition, the brake pedal 42 is depressed by the driver of the vehicle.
The brake pedal 42 is coupled to the travel sensor 240 for producing a signal that is indicative of the length of travel of the input piston 34 and providing the signal to an electronic control module (not shown). The control module may include a microprocessor. The control module receives various signals, processes signals, and controls the operation of various electrical components of the brake system 10 in response to the received signals. The control module can be connected to various sensors such as pressure sensors, travel sensors, switches, wheel speed sensors, and steering angle sensors. The control module may also be connected to an external module (not shown) for receiving information related to yaw rate, lateral acceleration, longitudinal acceleration of the vehicle such as for controlling the brake system 10 during vehicle stability operation. Additionally, the control module may be connected to the instrument cluster for collecting and supplying information related to warning indicators such as ABS warning light, brake fluid level warning light, and traction control/vehicle stability control indicator light.

During normal braking operations (normal boost apply braking operation) the plunger assembly 300 is operated to provide boost pressure to the boost conduit 260 for actuation of the wheel brakes 16a-d. Under certain driving conditions, the control module communicates with a powertrain control module (not shown) and other additional braking controllers of the vehicle to provide coordinated braking during advanced braking control schemes (e.g., anti-lock braking (AB), traction control (TC), vehicle stability control (VSC), and regenerative brake blending). During a normal boost apply braking operation, the flow of pressurized fluid from the brake pedal unit 20 generated by depression of the brake pedal 42 is diverted into the internal pedal simulator assembly 100. The simulation valve 74 is actuated to divert fluid through the simulation valve 74 from the simulation chamber 144 to the reservoir 18 via the conduits 146, 72, 66, and 68. Note that fluid flow from the simulation chamber 144 to the reservoir 18 is closed off once the passageways 64 in the input piston 34 move past the seal 60. Prior to movement of the input piston 34, as shown in Figs. 1 and 2, the simulation chamber 144 is in fluid communication with the reservoir 18 via the conduits 66 and 68.

During the duration of the normal braking mode, the simulation valve 74 remains open permitting the fluid to flow from the simulation chamber 144 to the reservoir 18. The fluid within the simulation chamber 144 is non-pressurized and is under very low pressures, such as atmospheric or low reservoir pressure. This non- pressurized configuration has an advantage of not subjecting the sealing surfaces of the pedal simulator to large frictional forces from seals acting against surfaces due to high pressure fluid. In conventional pedal simulators, the piston(s) are under increasingly high pressures as the brake pedal is depressed subjecting them to large frictional forces from the seals, thereby adversely affecting the pedal feel.

Also during the normal boost apply braking operation, the isolation valves 320 and 322 are energized to a secondary position to prevent the flow of fluid from the conduits 156 and 166 through the valves 320 and 322. Fluid flow is prevented from flowing from the ports 320a and 322a to the ports 320c and 322c, respectively. Thus, the fluid within the first and second output pressure chambers 198 and 228 of the brake pressure unit 20 are fluidly locked which generally prevents the first and second output pistons 38 and 40 from moving further. More specifically, during the initial stage of the normal boost apply braking operation, movement of the input rod 45 causes movement of the input piston 34 in a rightward direction, as viewing Fig. 2. Initial movement of the input piston 34 causes movement of the primary piston 38 via the low rate simulator spring 108. Movement of the primary piston 38 causes initial movement of the secondary piston 40 due to the mechanical connection therebetween by the locking member 180 and the springs 188 and 190. Note that during this initial movement of the primary piston 38, fluid is free to flow from the primary pressure chamber 198 to the reservoir 18 via conduits 85, 154, and 68 until the conduit 85 moves past the seal 81.
Also, during initial movement of the secondary piston 40, fluid is free to flow from the secondary pressure chamber 228 to the reservoir 18 via the conduits 155 and 164 until the conduit 155 moves past the seal 154.

After the primary and secondary pistons 38 and 40 stop moving (by closing of the conduits 85 and 155 and closing of the first and second base brake valves 320 and 322), the input piston 34 continues to move rightward, as viewing Figs. 1 and 2, upon further movement by the driver depressing the brake pedal 42. Further movement of the input piston 34 compresses the various springs of the pedal simulator assembly 100, thereby providing a feedback force to the driver of the vehicle.

During normal braking operations (normal boost apply braking operation) while the pedal simulator assembly 100 is being actuated by depression of the brake pedal 42, the plunger assembly 300 can be actuated by the electronic control unit to provide actuation of the wheel brakes 16a-d. Actuation of the isolation valves 320 and 322 to their secondary positions to prevent the flow of fluid from the conduits 156 and 166 through the valves 320 and 322 isolates the brake pedal unit 20 from the wheel brakes 16a-d. The plunger assembly 300 may provide "boosted" or higher pressure levels to the wheel brakes 16a-d compared to the pressure generated by the brake pedal unit 20 by the driver depressing the brake pedal 42. Thus, the system 10 provides for assisted braking in which boosted pressure is supplied to the wheel brakes 16a-d during a normal boost apply braking operation helping reduce the force required by the driver acting on the brake pedal 42.

To actuate the wheel brakes 16a-d via the plunger assembly 300 when in its rest position, as shown in Figs. 1 and 3, the electronic control unit energizes the venting valve 302 to its closed position, as shown in Fig. 1, such that fluid is prevented from venting to reservoir by flowing from the conduit 306 to the conduit 296. The pumping valve 304 is de-energized to its open position, as shown in Fig. 1, to permit flow of fluid through the pumping valve 304. The electronic control unit actuates the motor 422 in a first rotational direction to rotate the screw shaft 424 in the first rotational direction. Rotation of the screw shaft 424 in the first rotational direction causes the piston 410 to advance in the forward direction (rightward as viewing Figs. 1 and 3). Movement of the piston 410 causes a pressure increase in the first pressure chamber 450 and fluid to flow out of the first pressure chamber 450 and into the conduit 306. Fluid can flow into the boost conduit 260 via the open pumping valve 304. Note that fluid is permitted to flow into the second pressure chamber 452 via the conduit 308 as the piston 410 advances in the forward direction. Pressurized fluid from the boost conduit 260 is directed into the conduits 324 and 326 through the isolation valves 320 and 322. The pressurized fluid from the conduits 324 and 326 can be directed to the wheel brakes 16a-d through opened apply valves 340, 344, 348, and 352 while the dump valves 342, 346, 350, and 354 remain closed. When the driver releases the brake pedal 42, the pressurized fluid from the wheel brakes 16a-d may back drive the ball screw mechanism 420 moving the piston 410 back to its rest position. Under certain circumstances, it may also be desirable to actuate the motor 422 of the plunger assembly 300 to retract the piston 410 withdrawing the fluid from the wheel brakes 16a-d. During a forward stroke of the plunger assembly 300, the pumping valve 304 may be in its open position or held closed

During a braking event, the electronic control module can also selectively actuate the apply valves 340, 344, 348, and 352 and the dump valves 342, 346, 350, and 354 to provide a desired pressure level to the wheel brakes 16d, 16a, 16c, and 16b, respectively.

In some situations, the piston 410 of the plunger assembly 300 may reach its full stroke length within the bore 402 of the housing 400 and additional boosted pressure is still desired to be delivered to the wheel brakes 16-d. The plunger assembly 300 is a dual acting plunger assembly such that it is configured to also provide boosted pressure to the boost conduit 260 when the piston 410 is stroked rearwardly. This has the advantage over a conventional plunger assembly that first requires its piston to be brought back to its rest or retracted position before it can again advance the piston to create pressure within a single pressure chamber. If the piston 410 has reached its full stroke, for example, and additional boosted pressure is still desired, the pumping valve 304 is energized to its closed check valve position. The venting valve 302 may be de-energized to its open position. Alternatively, the venting valve 302 may be left energized in its closed to permit fluid flow through its check valve during a pumping mode. The electronic control unit actuates the motor 422 in a second rotational direction opposite the first rotational direction to rotate the screw shaft 424 in the second rotational direction. Rotation of the screw shaft 424 in the second rotational direction causes the piston 410 to retract or move in the rearward direction (leftward as viewing Figs. 1 and 3). Movement of the piston 410 causes a pressure increase in the second pressure chamber 452 and fluid to flow out of the second pressure chamber 452 and into the conduit 308. Note that fluid is permitted to flow into the first pressure chamber 450 via the conduits 306 and 296 as the piston 410 moves rearwardly or in its return stroke. Pressurized fluid from the boost conduit 260 is directed into the conduits 324 and 326 through the isolation valves 320 and 322. The pressurized fluid from the conduits 324 and 326 can be directed to the wheel brakes 16a-d through the opened apply valves 340, 344, 348, and 352 while dump valves 342, 346, 350, and 354 remain closed. In a similar manner as during a forward stroke of the piston 410, the electronic control module can also selectively actuate the
apply valves 340, 344, 348, and 352 and the dump valves 342, 346, 350, and 354 to provide a desired pressure level to the wheel brakes 16d, 16a, 16c, and 16b, respectively.

As shown in Fig. 3, the first portion 404 of the bore 402 generally has a fluid diameter D1 corresponding to where the outer diameter of the seal 440 slides along the inner cylindrical surface of the first portion 404 of the bore 402. The second portion 406 of the bore 402 generally has a fluid diameter D2 corresponding to inner diameter of the seal 442 sliding against the outer diameter of the central portion 414 of the piston 410. The first pressure chamber 450 generally has an effective hydraulic area corresponding to the diameter D2 since fluid is diverted through the conduits 306, 260, and 308 as the piston 410 is advanced in the forward direction. The second pressure chamber 452 has an effective hydraulic area corresponding to the diameter D1 minus the diameter D2. The plunger assembly 300 can be configured to have any suitable dimensions for the diameters D1 and D2. In one embodiment, the diameters D1 and D2 can be configured such that the effective area defined by D1 can be greater than the annular effective area defined by D1 and D2. This configuration provides that on the back stroke in which the piston is moving rearwardly, less torque (or power) is required by the motor 422 to maintain the same pressure as in its forward stroke. Besides using less power, the motor 422 may also generate less heat during the rearward stroke of piston 410. Under circumstances in which the driver presses on the pedal 42 for long durations, the plunger assembly 300 could be operated to apply a rearward stroke of the piston 410 to prevent overheating of the motor 422. Note that the chamber 450 should be sized larger than the chamber 452.

Instead of using the apply valves 340, 344, 348, and 352 and the dump valves 342, 346, 350, and 354 to provide a desired pressure level to the wheel brakes 16d, 16a, 16c, and 16b, the system 10 could replace the apply and dump valves with single control valves (not shown) in the conduits corresponding to the wheel brakes 16a-d. The control valves can be actuated individually, in a multiplexing manner, between their open and closed positions to provide different braking pressures within the wheel brakes 16a-d. This may be used during various braking functions such as anti-lock braking, traction control, dynamic rear proportioning, vehicle stability control, hill hold, and regenerative braking. Pressurized fluid is returned from the wheel brakes 16a-d to the plunger assembly 300 through the control valves instead of being diverted to the reservoir. In this situation, the plunger assembly 300 is preferably configured and operated by the electronic control unit (not shown) such that relatively small rotational increments of the motor 422 and/or ball screw mechanism 420 are obtainable. Thus, small volumes of fluid and relatively minute pressure levels are able to be applied and removed from the conduits associated with the wheel brakes 16a-d. For example, the motor 422 may be actuated to turn 0.5 of a degree to provide a relatively small amount of fluid and pressure increase. This enables a multiplexing arrangement such that the plunger assembly 300 can be controlled to provide individual wheel pressure control. Thus, the plunger assembly 300 and the system 10 can be operated to provide individual control for the wheel brakes 16a-d or can be used to control one or more wheel brakes 16a-d simultaneously by opening and closing the appropriate control valves (not shown).

In the event of a loss of electrical power to portions of the brake system 10, the brake system 10 provides for manual push through or manual apply such that the brake pedal unit 20 can supply relatively high pressure fluid to the primary output conduit 156 and the secondary output conduit 166. During an electrical failure, the motor 422 of the plunger assembly 300 might cease to operate, thereby failing to produce pressurized hydraulic brake fluid from the plunger assembly 300. The isolation valves 320 and 324 will shuttle (or remain) in their positions to permit fluid flow from the conduits 156 and 166 to the wheel brakes 16a-d. The simulation valve 74 is shuttled to its closed position 74a, as shown in Figs. 1 and 2, to prevent fluid from flowing out of the simulation chamber 144 to the reservoir 18. Thus, moving the simulation valve 74 to its closed position 74a hydraulically locks the simulation chamber 144 trapping fluid therein. During the manual push-through apply, the primary and secondary output pistons 38 and 40 will advance rightward pressurizing the chambers 198 and 228, respectively. Fluid flows from the chambers 198 and 228 into the conduits 156 and 166, respectively, to actuate the wheel brakes 16a-d as described above.

During the manual push-through apply, initial movement of the input piston 34 forces the spring(s) of the pedal simulator to start moving the pistons 38 and 40. After further movement of the input piston 34, in which the fluid within the simulation chamber 144 is trapped or hydraulically locked, further movement of the input piston 34 pressurizes the simulation chamber 144 causing movement of the primary piston 38 which also causes movement of the secondary piston 40 due to pressurizing of the primary chamber 144. As shown in Figs. 1 and 2, the input piston 34 has a smaller diameter (about the seal 60) than the diameter of the primary piston 38 (about the seal 80). Since the hydraulic effective area of the input piston 34 is less than the hydraulic effective area of the primary piston 38, the input piston 34 may travel more axially in the right-hand direction as viewing Figs. 1 and 2 than the primary piston 38. An advantage of this configuration is that although a reduced diameter effective area of the input piston 34 compared to the larger diameter effective area of the primary piston 38 requires further travel, the force input by the driver's foot is reduced. Thus, less force is required by the driver acting on the brake pedal 42 to pressurize the wheel brakes compared to a system in which the input piston and the primary piston have equal diameters.

In another example of a failed condition of the brake system 10, the hydraulic control unit 12 may fail as discussed above and furthermore one of the output pressure chambers 198 and 228 may be reduced to zero or reservoir pressure, such as failure of a seal or a leak in one of the conduits 156 or 166. The mechanical connection of the primary and secondary pistons 38 and 40 prevents a large gap or distance between the pistons 38 and 40 and prevents having to advance the pistons 38 and 40 over a relatively large distance without any increase in pressure in the non-failed circuit. For example, if the brake system 10 is under a manual push through mode and additionally fluid pressure is lost in the output circuit relative to the secondary piston 40, such as for example in the conduit 166, the secondary piston 40 will be forced or biased in the rightward direction due to the pressure within the primary chamber 198. If the primary and secondary pistons 38 and 40 were not connected together, the secondary piston 40 would freely travel to its further most right-hand position, as viewing Figs. 1 and 2, and the driver would have to depress the pedal 42 a distance to compensate for this loss in travel. However, because the primary and secondary pistons 38 and 40 are connected together through the locking member 180, the secondary piston 40 is prevented from this movement and relatively little loss of travel occurs in this type of failure. Thus, the maximum volume of the primary pressure chamber 198 is limited had the secondary piston 40 not be connected to the primary piston 38.

In another example, if the brake system 10 is under a manual push through mode and additionally fluid pressure is lost in the output circuit relative to the primary piston 40, such as for example, in the conduit 156, the secondary piston 40 will be forced or biased in the leftward direction due to the pressure within the secondary chamber 228. Due to the configuration of the brake pedal unit 20, the left-hand end of the secondary piston 40 is relatively close to the right-hand end of the primary piston 38. Thus, movement of the secondary piston 40 towards the primary piston 38 during this loss of pressure is reduced compared to a conventional master cylinder in which the primary and secondary pistons have equal diameters and are slidably disposed in the same diameter bore. To accomplish this advantage, the housing 24 of the brake pedal unit 20 includes a stepped bore arrangement such that diameter of the second bore 28 which houses the primary piston 38 is larger than the third bore 30 housing the secondary piston 40. A portion of the primary chamber 198 includes an annular region surrounding a left-hand portion of the secondary piston 40 such that the primary and secondary pistons 38 and 40 can remain relatively close to one another during a manual push-through operation. In the configuration shown, the primary and secondary pistons 38 and 40 travel together during a manual push-through operation in which both of the circuits corresponding to the conduits 156 and 166 are intact. This same travel speed is due to the hydraulic effective areas of the pistons 38 and 40, for their respective output pressure chambers 198 and 228, are approximately equal. In a preferred embodiment, the area of the diameter of the secondary piston 40 is approximately equal to the area of the diameter of the primary piston 38 minus the area of the diameter of the secondary piston 40. Of course, the brake pedal unit 20 could be configured differently such that the primary and secondary pistons 38 and 40 travel at different speeds and distances during a manual push though operation.

During a manual push-through operation in which both of the circuits corresponding to the conduits 156 and 166 are intact, such as during an electrical failure described above, the combined hydraulic effective area of the primary and secondary pistons 38 and 40 is the area of the diameter of the primary piston 38. However, during a failure of one of the circuits corresponding to the conduits 156 and 166, such as by a leak in the conduit 166, the hydraulic effective area is halved such that the driver can now generate double the pressure within the primary chamber 198 and the non-failed conduit 156 when advancing the primary piston 38 during a manual push-through operation via depression of the brake pedal 42. Thus, even though the driver is actuating only two of the wheel brakes 16a and 16d during this manual push through operation, a greater pressure is obtainable in the non-failed primary chamber 198. Of course, the stroke length of the primary piston 38 will need to be increased to compensate.

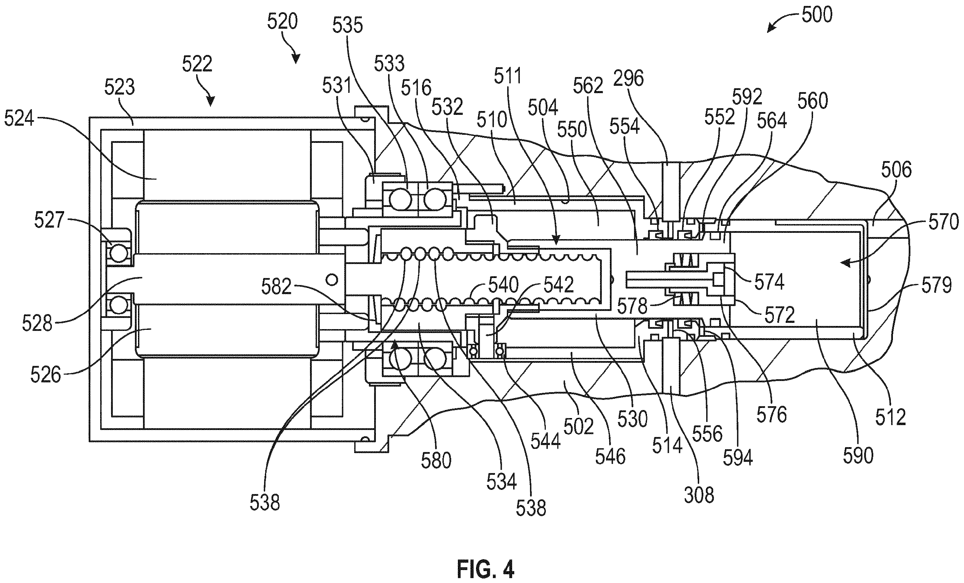

There is illustrated in Fig. 4 an alternate embodiment of a plunger assembly, indicated generally at 500, which may be used for the plunger assembly 300 in the brake system 10, for example. The plunger assembly 500 includes a housing 502 having a multi-stepped bore 504 formed therein. If installed into the system 10, the conduits 296, 306, and 308 are in fluid communication with the bore 504. A hollow sleeve 510 may be inserted into the bore 504. Although the components of the plunger assembly 500 may be made of any suitable material, the housing 502 may be made of aluminum for weight reduction while the sleeve 510 may be made of a hard coat anodized metal for accepting a piston assembly 511 slidably disposed therein. The sleeve 510 has a multi-stepped inner bore including a first portion 512, a second portion 514, and a third portion 516 (similar to the first portion 404, the second portion 406, and the third portion 408 of the bore 402 of the plunger assembly 300).

The plunger assembly 500 further includes a ball screw mechanism, indicated generally at 520. The ball screw mechanism 520 includes a motor 522 having an outer housing 523 which houses a stator 524 for rotating a rotor 526. The rotor 526 rotates a screw shaft 528 extending along the axis of the plunger assembly 500. A rear end of the rotor 526 is supported in the housing 523 by a bearing assembly 527. The front end of the rotor 526 is connected to a multi-piece support assembly 531 which is supported by a pair of bearing assemblies 533 and 535 mounted in the bore 504 of the housing 502. The bearing assemblies 527, 533, and 535 are shown as ball bearing assemblies having upper and lower races. However, it should be understood that the bearings assemblies 531, 533, and 535 can be any suitable structure.

The piston assembly 511 includes a piston 530 threadably attached to an intermediate connector 532 which is threadably attached to a nut 534. The nut 534 includes an internal threaded bore 536 having helical raceways formed therein for retaining a plurality of balls 538. The balls 538 are also retained in raceways 540 formed in the outer surface of the screw shaft 528, thereby functioning as a ball screw drive mechanism. To prevent rotation of the piston assembly 511, the plunger 500 can include an anti-rotation device including a pin 542 extending radially outwardly from the intermediate connector 532. A bearing assembly 544 is attached to the pin 542 and rolls along a slot 546 formed in the third portion 516 of the sleeve 510. Of course, any suitable anti-rotation device may be used. Also, although a single anti-rotation device is shown and described, the plunger assembly 500 can have one or more, such as for example, a pair of anti-rotation devices arranged 180 degrees apart from one another.

The piston 530 of the piston assembly 511 includes an outer cylindrical surface 550 which sealing engages with a pair of lip seals 552 and 554 mounted in grooves formed in the sleeve 510. Radial passageways 556 are formed through the sleeve 510 which are in fluid communication with the reservoir conduit 296. The piston 530 includes an enlarged end portion 560 and a smaller diameter central portion 562. A seal, such as quad seal 564 is mounted in a groove formed in the enlarged end portion 560 of the piston 530. The seals 552, 554, and 564 function similarly to the seals 442, 444, and 440 of the plunger assembly 300 described above.

The piston 530 of the piston assembly 511 may optionally include a stop cushion assembly, indicated generally at 570. The stop cushion assembly 570 includes end member 572 connected to the end of the piston 530 by a bolt 574 or other fastener. The end member 572 is disposed in a recess 576 formed in the piston 530 and is mounted by the bolt 574 such that the end member 572 may move a limited amount relative to the piston 530. A spring member, such as a plurality of disc springs 578 (or Belleville washer or spring washers) bias the end member 572 in a direction away from the piston 530. The right-hand most end of the end member 572, as viewing Fig. 4, extends past the end of the piston 530. The stop cushion assembly 570 provides for a cushioned stop if the end of the piston 530 engages with a bottom wall 579 of the bore 504 by compression of the springs 578.

The piston assembly 511 may also include an optional rear stop cushion assembly, indicated generally at 580. The rear stop cushion assembly 580 includes a disc spring 582 disposed about the screw shaft 528 and engages with the end wall of the nut 534 of the piston assembly 511. The disc spring 582 may slightly compress when the piston assembly 511 is moved back its fully rested position.

A first pressure chamber 590 is generally defined by the sleeve 510, the bore 504, the enlarged end portion 560 of the piston 530, and the seal 564. A second pressure chamber 592, located generally behind the enlarged end portion 560 of the piston 530, is generally defined by the sleeve 510, the bore 504, the seals 552 and 564, and the piston 530. Passageways 594 are formed through the sleeve 510 and are in fluid communication with the second pressure chamber 592 and the conduit 308.

The piston assembly 500 operates in a similar manner as the plunger assembly 300 and will be described as being used in the system 10. For example, to actuate the wheel brakes 16a-d when the plunger assembly 500 is in its rest position, as shown in Fig. 4, the electronic control unit actuates the motor 522 in a first rotational direction to rotate the screw shaft 528 in the first rotational direction. Rotation of the screw shaft 528 in the first rotational direction causes the piston assembly 511 to advance in the forward direction (rightward as viewing Figs. 1 and 3). Movement of the piston assembly 511 causes a pressure increase in the first pressure chamber 590 and fluid to flow out of the first pressure chamber 590 and into the conduit 306. Fluid can flow into the boost conduit 260 via the open pumping valve 304 or the check valve if the pumping valve 304 was in its closed position. Note that fluid is permitted to flow into the second pressure chamber 592 via the conduit 308 as the piston assembly 511 advances in the forward direction. Pressurized fluid from the boost conduit 260 is directed into the conduits 324 and 326 through the isolation valves 320 and 322. The pressurized fluid from the conduits 324 and 326 can be directed to the wheel brakes 16a-d through opened apply valves 340, 344, 348, and 352 while the dump valves 342, 346, 350, and 354 remain closed. When the driver releases the brake pedal 42, the pressurized fluid from the wheel brakes 16a-d may back drive the ball screw mechanism 420 moving the piston 410 back towards its rest position.

The plunger assembly 500 is a dual acting plunger assembly such that it is configured to also provide boosted pressure to the boost conduit 260 when the piston assembly 511 is stroked rearwardly. The electronic control unit actuates the motor 522 in a second rotational direction opposite the first rotational direction to rotate the screw shaft 528 in the second rotational direction. Rotation of the screw shaft 528 in the second rotational direction causes the piston assembly 511 to retract or move in the rearward direction (leftward as viewing Figs. 1 and 3). Movement of the piston 530 causes a pressure increase in the second pressure chamber 592 and fluid to flow out of the second pressure chamber 592 and into the conduit 308. Pressurized fluid from the boost conduit 260 is directed into the conduits 324 and 326 through the isolation valves 320 and 322. The pressurized fluid from the conduits 324 and 326 can be directed to the wheel brakes
16a-d through the opened apply valves 340, 344, 348, and 352 while dump valves 342, 346, 350, and 354 remain closed. The pumping valve may be closed such that low pressure fluid fills the first pressure chamber 590.

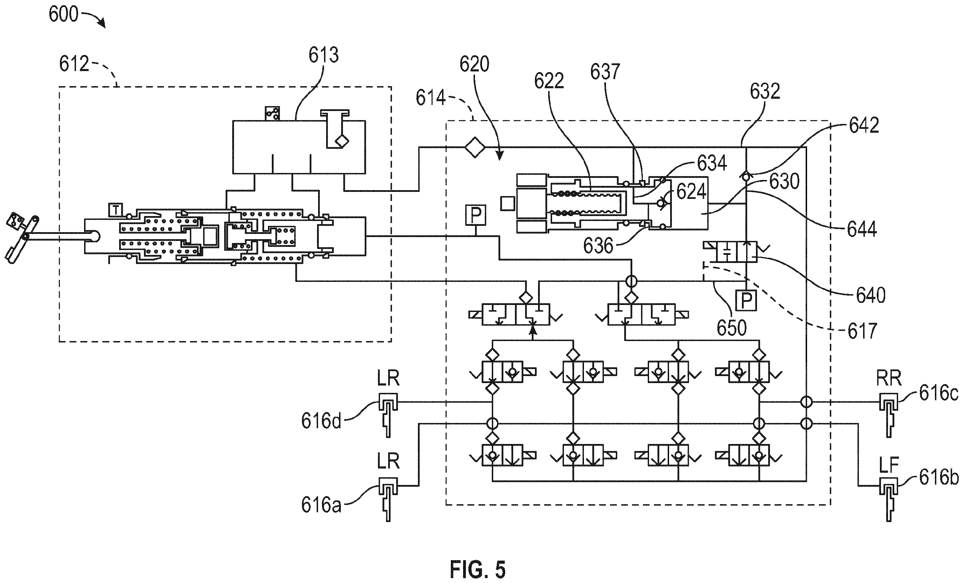

There is illustrated in Fig. 5 a schematic illustration of a second embodiment of a brake system, indicated generally at 600. The brake system 600 is similar to the brake system 10 of Fig. 1 and, therefore, like functions and structures will not be described. Similar to the brake system 10, the brake system 600 includes a brake pedal unit 612, a hydraulic control unit 614, and wheel brakes 616a-d.

The brake system 600 does not include a venting valve like the venting valve 302 of the system 10. Instead, the brake system 600 includes a plunger assembly 620 similar to the plunger assembly 300. One of the differences is that the plunger assembly 620 has a piston 622 with a check valve 624 mounted therein. The check valve 624 permits fluid to flow from a first pressure chamber 630 to a reservoir conduit 632 (in communication with a reservoir 613) via a conduit 634 within the piston 622. It is noted that the check valve 624 prevents the flow of fluid from the reservoir 613 to the first pressure chamber 630 via the conduit 634. The check valve 624 also prevents the flow of fluid though the piston 622 from a second pressure chamber 636 to the first pressure chamber 630.

The system 600 includes a pumping valve 640 and a check valve 642. The check valve 642 is located within a conduit 644. The check valve 642 restricts the flow of fluid from the first pressure chamber 630 to the reservoir 613, while permitting the flow of fluid from the reservoir 613 to the pumping valve 640 and first pressure chamber 630. The pumping valve 640 is movable between an open position to permit the flow of fluid out of the first pressure chamber 630 and to a boost conduit 650 for delivering pressurized fluid to the wheel brakes 616a-d.

When the piston 622 advances in the forward direction, rightward as viewing Fig. 5, fluid flows out of the first pressure chamber 630 and through the de- energized pumping valve 640 into the boost conduit 650. Note that fluid is permitted to flow into the second pressure chamber 636. In the reverse stroke of the piston 622, the pumping valve 650 is energized to a closed position and fluid flows out of the second pressure chamber 636 but is prevented from flowing past the check valve 624 into the first pressure chamber 630. Note that in a reverse stroke, the piston 622 will have been moved rightward as viewing Fig. 5 such that the conduit 634 is to the right of a lip seal 637 to prevent fluid flow into the reservoir 613 from the second pressure chamber 636 via the conduit 634.

One of the advantages of the brake system 600 is a reduced cost due to not having to have a solenoid actuated venting valve. Additionally, there may not be a need to maintain power to the motor of the plunger assembly 620 on every brake apply. Another advantage is that the pumping valve only requires a small, low force, low cost, low current draw solenoid since it may hydraulically latch in a closed position as indicated by the dotted line 617 in Fig. 5. Under certain situations, the system 10 may need to be controlled to de-latch the valve 640.

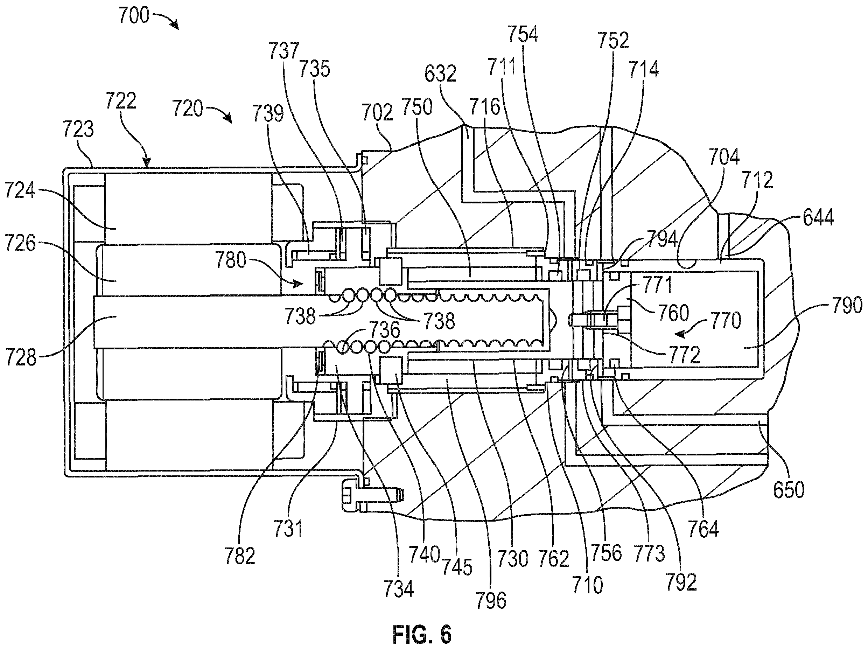

There is illustrated in Fig. 6 an alternate embodiment of a plunger assembly, indicated generally at 700, which may be used for the plunger assembly 620 in the brake system 600, for example. The plunger assembly 700 includes a housing 702 having a multi-stepped bore 704 formed therein. If installed into the system 600, the conduits 632, 644, and 650 are in fluid communication with the bore 704. A hollow sleeve 710 may be inserted into the bore 504. Although the components of the plunger assembly 700 may be made of any suitable material, the housing 702 may be made of aluminum for weight reduction while the sleeve 710 may be made of a hard coat anodized metal for accepting a piston assembly 711 slidably disposed therein. The sleeve 710 has a multi-stepped inner bore including a first portion 712 and a second portion 714. Instead of a third portion, a tube 716 is press fit or slip fit onto the end of the second portion 714. The tube 716 may be made of an inexpensive material, such as extruded aluminum, instead of utilizing an expensive portion of the sleeve 710.

The plunger assembly 700 further includes a ball screw mechanism, indicated generally at 720. The ball screw mechanism 720 includes a motor 722 having an outer housing 723 which houses a stator 724 for rotating a rotor 726. The rotor 726 rotates a screw shaft 728 extending along the axis of the plunger assembly 700. The front end of the rotor 526 is connected to a multi-piece support assembly 731 which is supported by generally inexpensive needle bearings (compared to more expensive roller angular contact ball bearings as shown in Fig. 4). In particular, the plunger assembly 700 includes a pair of thrust needle bearings 735 and 737 and a radial needle bearing 739. The bearings engage with features of the support assembly 731.

The piston assembly 711 includes a piston 730 threadably attached to a nut 734. The nut 734 includes an internal threaded bore 736 having helical raceways formed therein for retaining a plurality of balls 738. The balls 738 are also retained in raceways 740 formed in the outer surface of the screw shaft 728, thereby functioning as a ball screw drive mechanism. To prevent rotation of the piston assembly 711, the plunger 700 can include an anti-rotation device including one or more bushings 745 that slide within corresponding slots 746 formed in the tube 716. Of course, any suitable anti-rotation device may be used.

The piston 730 of the piston assembly 711 includes an outer cylindrical surface 750 which sealing engages with a pair of seals 752 and 754 mounted in grooves formed in the sleeve 710. Radial passageways 756 are formed through the sleeve 710 which are in fluid communication with the reservoir conduit 632. The piston 730 includes an enlarged end portion 760 and a smaller diameter central portion 762. A seal, such as quad seal 764 is mounted in a groove formed in the enlarged end portion 760 of the piston 730.

The plunger assembly 700 may include a check valve assembly 770 located in the enlarged end portion 760 of the piston 730. The check valve 770 is similar in function to the check valve 624 of the system 600. The check valve assembly 770 includes a ball 771 selectively seated on a valve seat 772 fixed relative to the piston 730. A generally small or weak spring 773 biases the ball 771 onto the valve seat 772.

The piston assembly 711 may also include an optional rear stop cushion assembly, indicated generally at 780. The rear stop cushion assembly 780 includes one or more disc spring 782 disposed about the screw shaft 728 and engaged with the end wall of the nut 734 of the piston assembly 711. The disc springs 782 may slightly compress when the piston assembly 711 is moved back its fully rested position.

A first pressure chamber 790 is generally defined by the sleeve 710, the bore 704, the enlarged end portion 760 of the piston 730, and the seal 764. A second pressure chamber 792, located generally behind the enlarged end portion 760 of the piston 730, is generally defined by the sleeve 710, the bore 704, the seals 752 and 764, and the piston 730. Passageways 794 are formed through the sleeve 710 and are in fluid communication with the second pressure chamber 792 and the conduit 650.

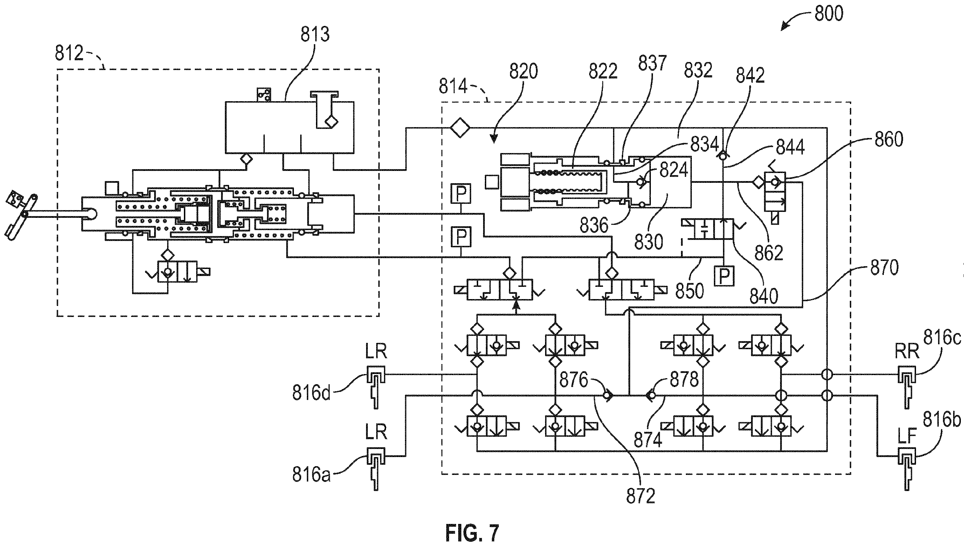

There is illustrated in Fig. 7 a schematic illustration of a third embodiment of a brake system, indicated generally at 800. The brake system 800 is similar to the brake system 600 and, therefore, like functions and structures will not be described. The brake system 10 is ideally suited for large passenger vehicles or trucks. Generally, larger vehicles require more braking power and more fluid volume than brake systems for smaller vehicles. This generally requires a larger consumption of power for the motor for the plunger assembly.

The brake system 800 includes a brake pedal unit 812, a hydraulic control unit 814, and wheel brakes 816a-d. The brake assembly 800 further includes a plunger assembly 820 having a piston 822 with a check valve 824 mounted therein. The check valve 824 permits fluid to flow from a first pressure chamber 830 to a reservoir conduit 832 (in communication with a reservoir 813) via a conduit 834 within the piston 822.
The check valve 824 prevents the flow of fluid from the reservoir 813 to the first pressure chamber 830 via the conduit 834. The check valve 824 also prevents the flow of fluid though the piston 882 from a second pressure chamber 836 to the first pressure chamber 830. The system 800 includes a pumping valve 840 and a check valve 842. The check valve 842 is located within a conduit 844. The check valve 842 restricts the flow of fluid from the first pressure chamber 830 to the reservoir 813, while permitting the flow of fluid from the reservoir 813 to the pumping valve 840 and first pressure chamber 830.
The pumping valve 840 is movable between an open position to permit the flow of fluid out of the first pressure chamber 830 and to a boost conduit 850 for delivering pressurized fluid to the wheel brakes 816a-d.

Comparing the systems 600 and 800, the system 800 additionally includes a solenoid actuated quick fill valve 860. The quick fill valve 860 is in fluid communication with the second pressure chamber 830 via a conduit 862. The quick fill valve 800 is also in fluid communication with the wheel brakes 816a and 816b (such as front wheel brakes) via conduit 870, 872, and 874. The conduits 872 and 874 have check valves 876 and 878, respectively, located therein to prevent fluid from the wheel brakes flowing back into the conduit 870. The quick fill valve 860 may have relatively large orifices that enable fluid to easily flow through the quick fill valve 860 when in its energized to its open position, such as when the plunger assembly 820 is actuated to deliver high pressure fluid to the first pressure chamber 830. Since a lot of power may be required to force fluid through relatively small orifices in various valves and components of the system 800, the addition of the quick fill valve 820 helps to reduce power consumption. This is especially useful for larger vehicles when the amount of fluid flow is increased compared to smaller vehicles. The quick fill valve 860 may be left energized under normal boosted braking applications. During other events, such as anti-lock braking or slip control, the quick fill valve 820 may be moved to its closed position.

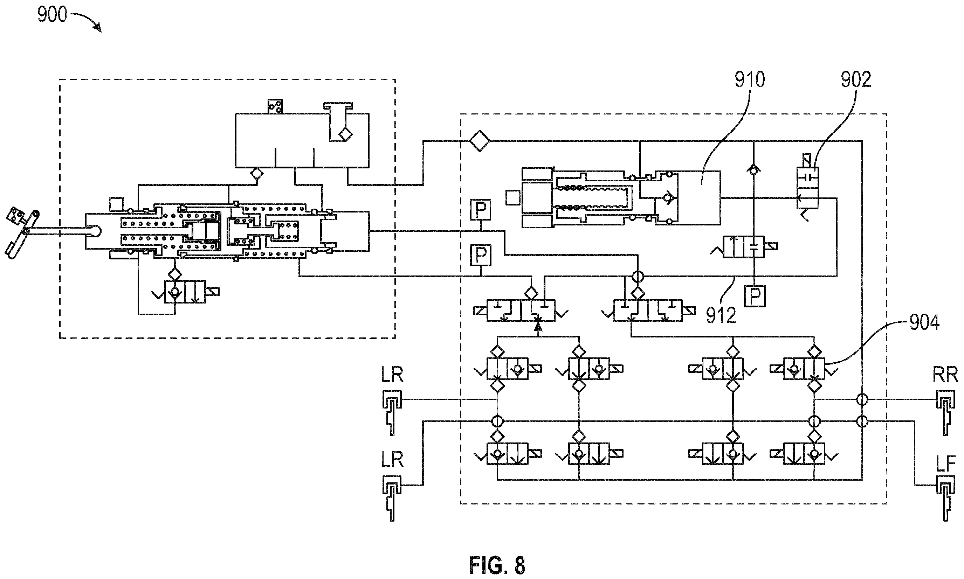

There is illustrated in Fig. 8 a schematic illustration of a fourth embodiment of a brake system, indicated generally at 900. The brake system 900 is similar in structure and function as the brake system 600. Instead of using a single pumping valve 640, the system 900 includes a pair of pumping valves 902 and 904 in a parallel arrangement between a second pressure chamber 910 and boost conduit 912. It may be more cost effective to provide a pair of smaller valves than a single larger valve.

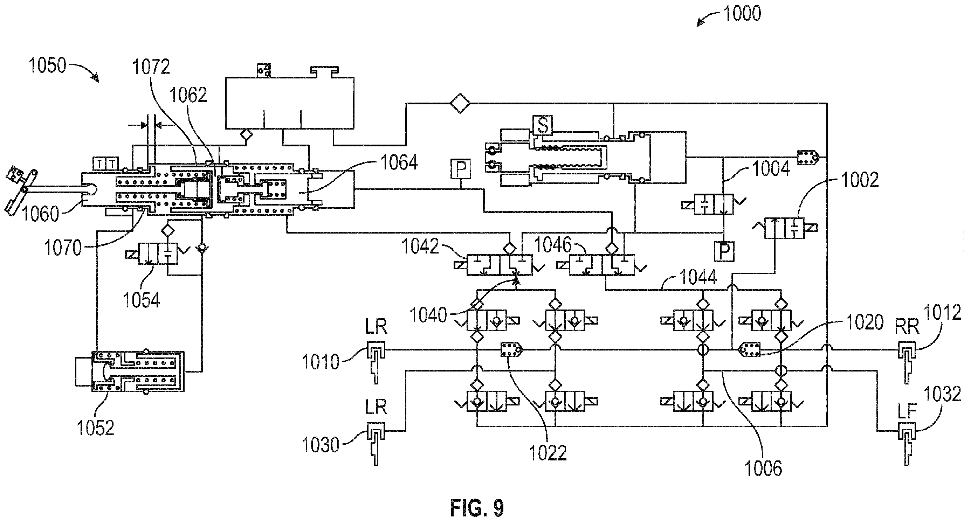

There is illustrated in Fig. 9 an alternate embodiment of a brake system, indicated generally at 1000. The brake system 1000 is similar to the brake system 600 described above with respect to Fig. 5. One of the differences is that the brake system 1000 includes a bypass valve 1002. The bypass valve 1002 provides a secondary pathway via conduits 1004 and 1006 for pressurizing wheel brakes 1010 and 1012. Check valves 1020 and 1022 are provided in the conduit 1006.

The brake system 1000 may be configured as a diagonally split system in which wheel brakes associated with opposite corner wheels are in one brake circuit and the other opposed corner wheel brakes are in another circuit. For example, the wheel brake 1010 may be associated with a right front wheel and a wheel brake 1030 may be associated with a left rear wheel. Fluid from a conduit 1040 from an exit port of a first isolation valve 1042 is in fluid communication with the wheel brakes 1010 and 1030.
The wheel brake 1012 may be associated with a left front wheel and a wheel brake 1032 may be associated with a right rear wheel. Fluid from a conduit 1044 from an exit port of a first isolation valve 1046 is in fluid communication with the wheel brakes 1012 and 1032.

The brake system 1000 includes a brake pedal unit, indicated generally at 1050. A pedal simulator 1052 and simulator valve 1054 are located remotely from the brake pedal unit 1050. The brake pedal unit 1050 includes an input piston 1060, a primary piston 1062, and a secondary piston 1064. Excluding the pedal simulator features, the brake pedal unit 1050 operates in a similar manner as the brake pedal unit 20 of the brake system 10 described above with respect to Fig. 1. One of the differences is that portions of the input piston 1060 overlaps portions of the primary piston 1062 in a radial direction. More specifically, the input piston 1060 includes a tubular extension 1070 which extends into a tubular extension 1072 of the primary piston 1062 by a distance D when the brake pedal unit 1050 is at rest, as shown in Fig. 9. This overlapping configuration helps to reduce the overall length of the brake pedal unit 1050 to provide a packaging advantage when installed into a vehicle's engine compartment. The reduction in length is provided by the overlapping distance D as well as not having to have an initial gap between the pistons.

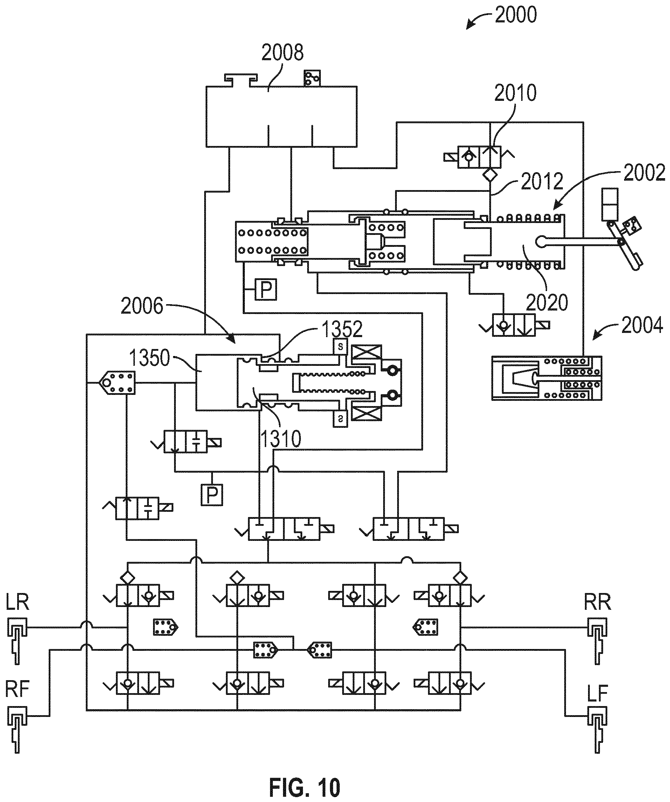

There is illustrated in Fig. 10 an alternate embodiment of a brake system, indicated generally at 2000. The brake system 2000 is similar to the brake system 1700 described above with respect to Fig. 9. The brake system 2000 includes a brake pedal unit 2002, a pedal simulator 2004, a plunger assembly 2006, and a reservoir 2008 which may be similar in structure and function as described above with respect to other embodiments of brake systems described herein. One of the differences is that the brake system 2000 includes an optional simulator test valve 2010 which may be electronically controlled between an open position, as shown in Fig. 10, and a powered closed position. The simulator test valve 2010 is not necessarily needed during a normal boosted brake apply or for a manual push through mode. The simulator test valve 2010 can be actuated to a closed position during various testing modes to determine the correct operation of other components of the brake system 2000. For example, the simulator test valve 2010 may be actuated to a closed position to prevent venting to the reservoir 2008 via a conduit 2012 such that a pressure build up in the brake pedal unit 2002 can be used to monitor fluid flow to determine whether leaks may be occurring through seals of various components of the brake system 2000.

As stated above, the system 2000 includes a source of pressure in the form of the plunger assembly 2006 to provide a desired pressure level to the wheel brakes.
The plunger assembly 2006 is generally similar to the plunger 300 and, thus, a detailed description of the plunger assembly 2006 will not be duplicated herein. The plunger assembly 2006 includes a piston 1310 which may be moved in a forward and rearward direction. The plunger assembly 2006 defines a first pressure chamber 1350 and a second pressure chamber 1352.

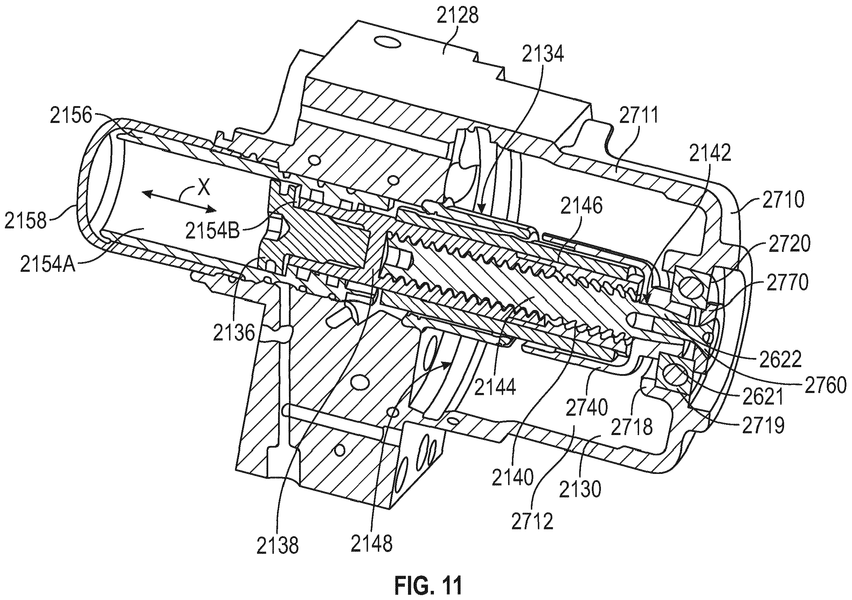

Referring now to Fig. 11, the plunger assembly includes an output housing 2128, an electric motor 2130, and an input housing 2132. Supported on the housing 2128 is a plunger, indicated generally at 2134. The plunger 2134 may be dual acting and includes a plunger head 2136 attached to a rod 2138. The rod 2138 has a threaded portion 2140. A ball screw assembly, indicated generally at 2142, operates as known to those skilled in the art. The ball screw assembly 2142 includes a threaded rod 2144, ball bearings (not illustrated) between the threaded portion 2140 and threaded rod 2144 such that the threaded portion 2140 is supported on the threaded rod 2144. An anti-rotation tube 2146 is supported on the housing 2128 by a torque coupler, indicated generally at 2148. The torque coupler 148 is attached or secured between the housing 2128 and anti- rotation tube 2146. For example, the torque coupler 2148 may be press fit to each of the housing 2128 and anti-rotation tube 2146.

The anti-rotation tube 2146 restrains the threaded portion 2140 from rotation. The anti-rotation tube 2146 has internal ridges 2150 corresponding to slots 152 on the threaded portion 2140. When the ridges 2150 are inserted in the slots 2152, the rod 2138 is restrained from rotating. As such, when the threaded rod 2144 is driven or rotated by the motor 2130, the head 2136 and rod 2138 move or translate in a first direction X. As illustrated, the plunger 2134 is in an unactuated, rightward position. As the motor 2130 drives the threaded rod 2144, the head 2136 moves between the rightward position and a leftward position (not illustrated).

The movement of the plunger 2134 pressurizes brake fluid in first and second annular chambers 2154A and 2154B, respectively, such that brake pressure is generated for the brake system 2102. The first chamber 2154A is defined by the head 2136, a sleeve 2156, and an end cap 2158 and the second chamber 2154B is defined between the head 2136, rod 2138, and sleeve 2156. Typically, the first and second chambers 2154A and 2154B, respectively, are hydraulically linked. Pressure in the first and second chambers 2154A and 2154B, respectively, rises as the plunger 2134 moves away from the motor 2130 and falls as the plunger 2134 moves toward the motor 2130.
During events such as slip control, the first and second chambers 2154A and 2154B, respectively, may be hydraulically isolated when the plunger 2134 is moving towards the motor 2130. When the first and second chambers 2154A and 2154B, respectively, are isolated, pressure in the second chamber 2154B rises and fluid from a reservoir (not shown) flows into the first chamber 2154A.

As shown in Fig. 11, the embodied electric motor 2130 comprises a motor housing 2710 for supporting a stator (not shown) that rotates a rotor 2740. The motor housing 2710 comprises a generally cylindrical enclosure 2711 with a bore 2712 extending from a front side 2713 to a back side 2714 of the cylindrical enclosure 2711. The bore 2712 opening on the back side of the cylindrical enclosure 2711 has stepped down diameter to define a front bearing stop 2718. A bearing support surface 2719 is adjacent the front bearing stop 2718, with a generally horizontal surface for supporting the outer race of a bearing 2720. The stator (not shown) is mounted within the cylindrical enclosure 2711, between the front and back sides with the outer circumferential surface of the stator adjacent the bore 2712. The bearing 2720 is positioned within the cylindrical enclosure 2711 such that the front side of the outer race of the bearing 2720 is proximate to the front bearing stop 2718 and the outermost portion of the outer race is proximate the bearing support surface 2719. In the illustrated embodiment, one end of the rotor 2740 is supported in the motor housing 2710 by engaging the inner race of the bearing 2720. The rotor 2740 rotor further defines a tapered bore 2740 for receiving a corresponding tapered end 2621 of a ball screw 2144. In the illustrated embodiment, the ball screw 2144 has a threaded bore 2622 for receiving a threaded fastener 2760. When threaded into the ball screw 2144, the threaded fastener 2760 passes through a washer 2770 and then through the opening in the bearing 2720. The threaded fastener 2760 is then threaded into the threaded bore 2622 of the ball screw 144 and thus is also passes through the center of the rotor 2740. The clamping force provided by the threaded fastener 2760 compresses the washer 2770 against one side of the inner race of the bearing 2720 and urges the ball screw 2144 toward the second side of the bearing 2720. The tapered end 2621 of the ball screw 2144 frictionally engages the tapered bore 2741 of the rotor 2740, thus transferring a force that causes the rotor 2740 to frictionally engage the other side of the inner race of the bearing 2720.

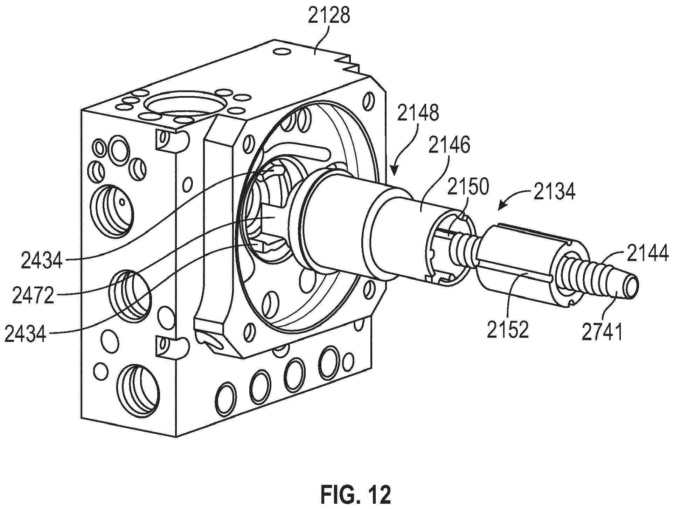

As shown in Fig. 12, one or more tabs 2472 project from the sleeve 2156 to form a loose interlocking connection with tabs 2434 on the anti-rotation tube 2146. The tolerances between the anti-rotation tube tabs 2434 and the sleeve tabs 2472 will allow for some rotational movement of the anti-rotation tube 2146, due to the elastic properties of the torque coupler 2148, without coming into contact with each other. It is also within the scope of the invention that the tolerances between the anti-rotation tube tabs 2434 and the sleeve tabs 2472 are such that rotation of the anti-rotation tube 2430 is limited by the respective tabs coming into contact with one another.

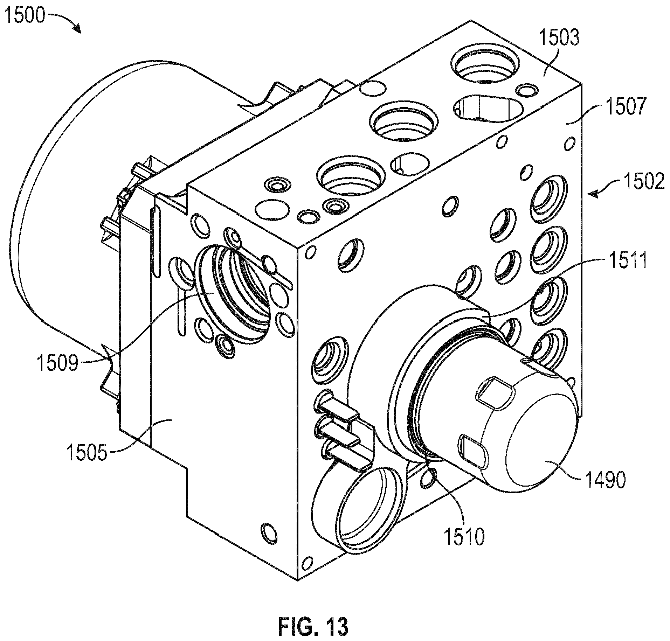

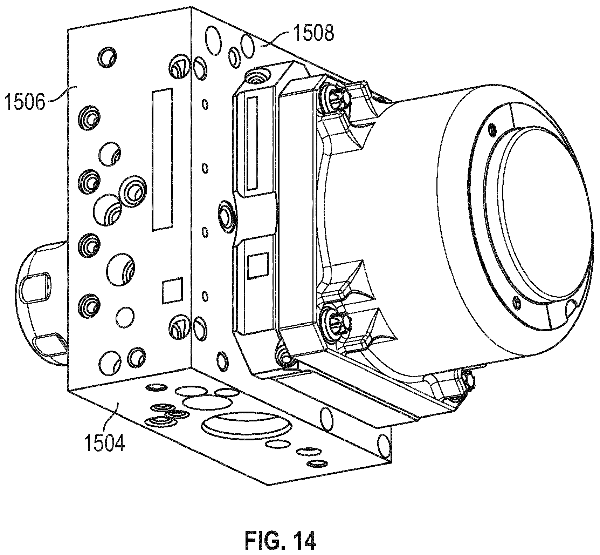

There is illustrated in Figs. 13 and 14 an alternate embodiment of a braking system assembly 1500. The braking assembly 1500 includes a housing 1502 generally comprised of six sides: top 1503, bottom 1504, first 1505, second 1506, front 1507, and back 1508. The housing 1502 may be formed as a single unit, as shown, or include two or more separately formed portions coupled together. The housing 1502 generally includes a first bore 1509 located in the first side of the housing 1502, and a second bore 1510 extending between the front 1507 and back sides 1508. A brake pedal unit similar to embodiments described above, but not shown in Fig. 13 and 14, includes an input piston. The input piston is slidably disposed in the first bore 1509 to actuate the master cylinder grouping. A plunger assembly, indicated generally at 1400, is slidably disposed in the second bore 1510, the purpose and function of which will be described in further detail below. In addition, the illustrated embodiment of the housing 1502 further comprises a threaded raised end cap mount 1511 extending from the second bore for securing an end cap 1490 to the housing 1502. In another embodiment, the raised end cap mount 1511 may be generally flush with the front surface 1507 permitting the end cap 1490 to be directly connected to the surface of the housing 1502. The second bore 1510 may comprise multiple stepped diameters for housing various components described below. In addition, the housing 1502 may also define additional openings or bores for valves, ECU connections, reservoir connections, conduits, and brake line attachments.

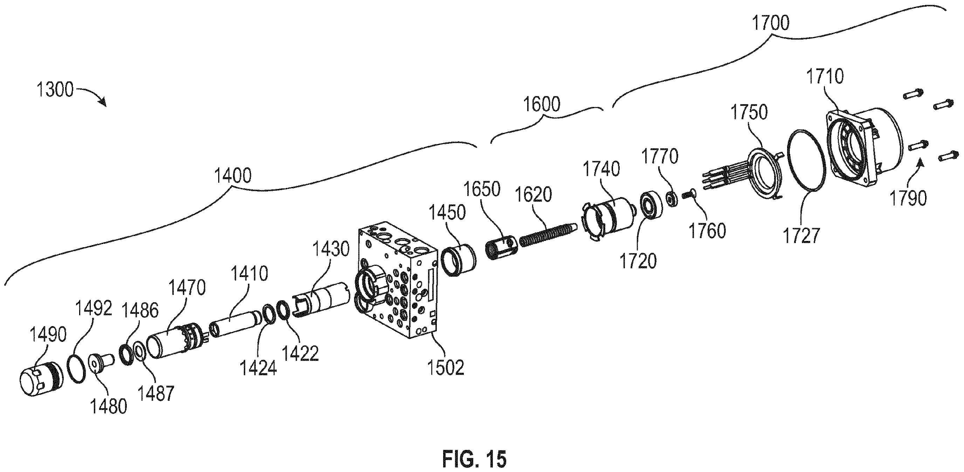

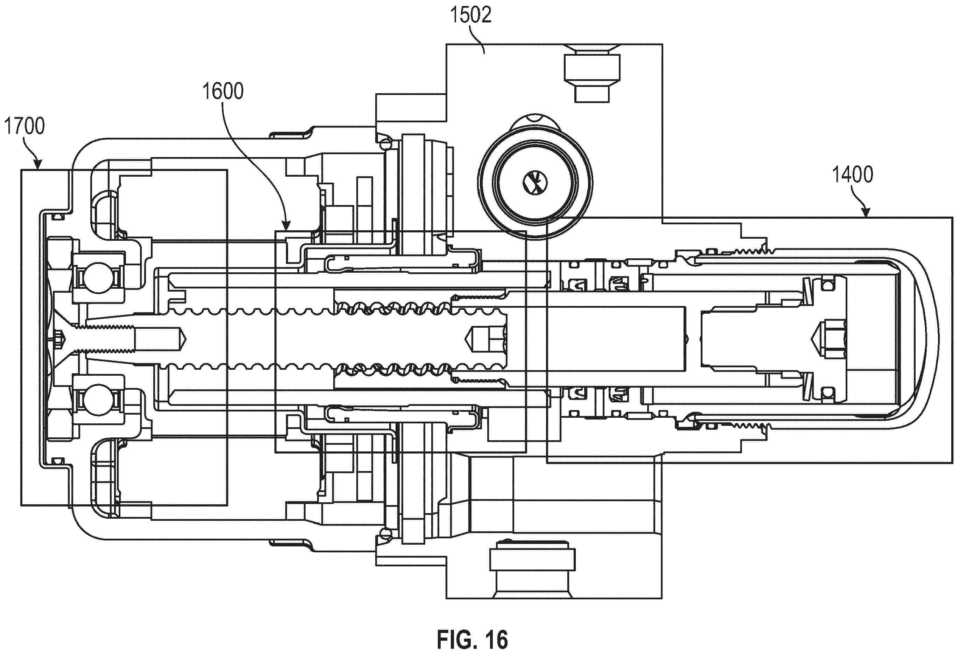

As shown in an exploded view in Fig. 15 and a cross sectional view in Fig. 16, the braking system 1500 comprises a power transmission unit grouping 1300. The illustrated power transmission unit 1300 comprises the plunger assembly, generally indicated as 1400, a ball nut assembly 1600, and a motor assembly 1700. In operation, a rotational movement of the motor assembly 1700 will drive a portion of the ball nut assembly 1600 in a rotational manner. The operation of the ball nut assembly 1600 will then convert the rotational movement of the motor assembly 1700 into a linear movement along the axis of rotation. The linear movement of a portion of the ball nut assembly 1600 is then transferred to a portion of the plunger assembly 1400 where the linear movement drives a pressurizing structure, such as a piston/cylinder arrangement, to generate a fluid pressure force that can be used for actuation of the wheel brakes.

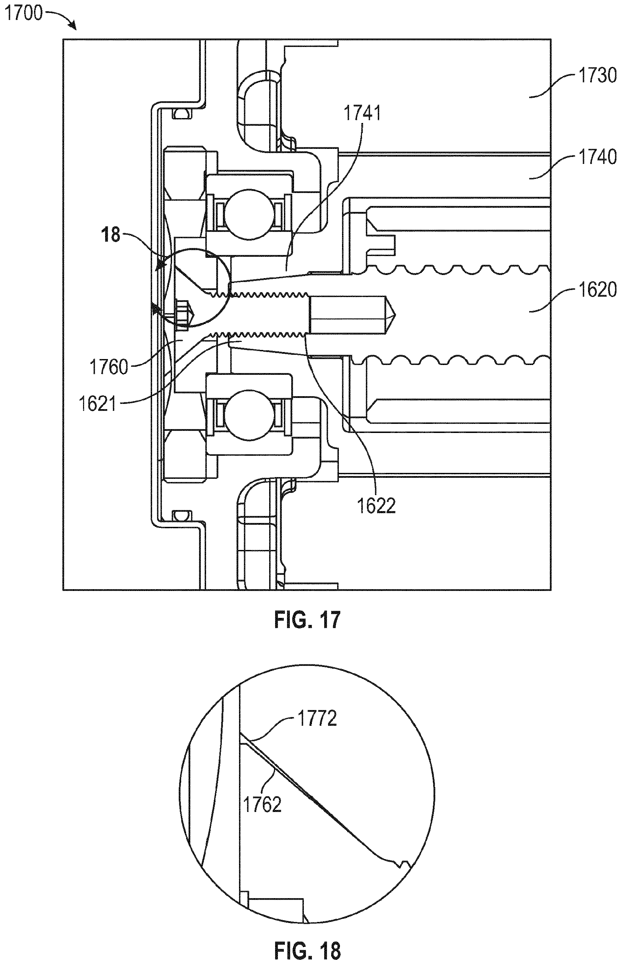

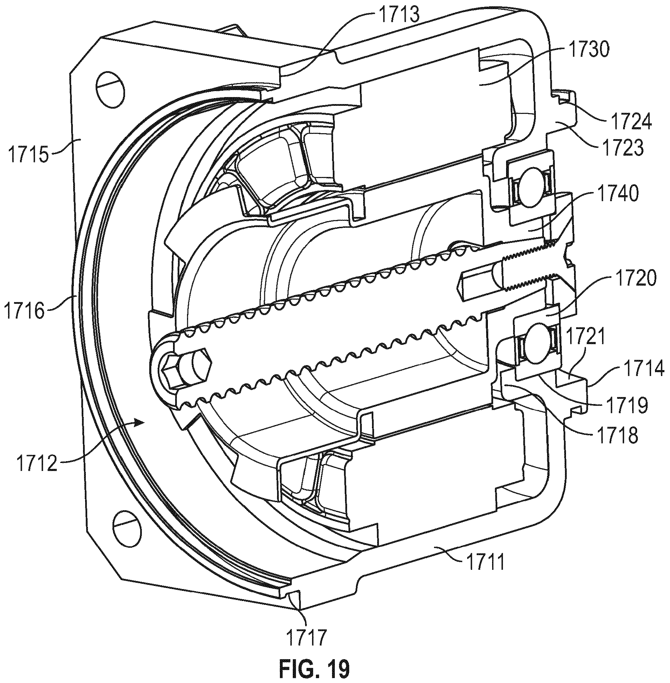

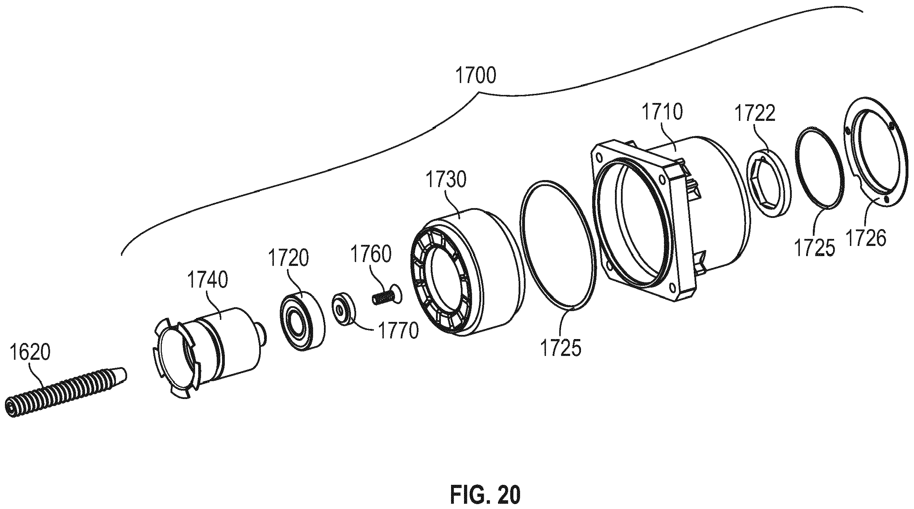

As shown in Figs. 17-21, the embodied motor assembly 1700 comprises an electric motor, known to those skilled in the art as having a motor housing 1710 for supporting a stator 1730 that rotates a rotor 1740. The motor housing 1710 comprises a generally cylindrical enclosure 1711 with a bore 1712 extending from a front side 1713 to a back side 1714 of the cylindrical enclosure 1711. A mounting surface 1715 and front lip 1716 define a front seal groove 1717 adjacent the bore 1712 opening on the front side. The bore 1712 opening on the back side of the cylindrical enclosure has stepped down diameter to define a front bearing stop 1718. A bearing support surface 1719 is adjacent the front bearing stop 1718, with a generally horizontal surface for supporting the outer race of a bearing 1720. The bearing support surface 1719 is adjacent to a larger diameter bore with a horizontally extending surface forming a nut support surface 1721. The nut support surface 1721 may further include threads or other fastening means for securing a nut 1722. Further, the back side of the cylindrical enclosure 1711 may also comprise a back lip 1723 forming a portion of the nut support surface 1721 on the interior, and also define a back seal groove 1724 on the exterior.

The stator 1730 is mounted within the cylindrical enclosure, between the front and back sides with the outer circumferential surface of the stator 1730 adjacent the bore 1712. The bearing 1720 is positioned within the cylindrical enclosure 1711 such that the front side of the outer race of the bearing 1720 is proximate to the front bearing stop 1718 and the outer diameter of the outer race is proximate the bearing support surface 1719. The nut 1722 comprises a threaded outer circumferential surface that threads into the nut support surface 1721. A portion of the nut 1722 will then be proximate to or abutting the outer race of the bearing 1720, thus securing the position of the bearing 1720 relative to the cylindrical enclosure 1711. In order to enclose the back side of the cylindrical enclosure 1711, a back side seal 1725 is set in the back seal groove 1724. A cover plate 1726 is mounted to the cylindrical enclosure 1711 such that the back side seal is pressed against a portion of the cover plate 1726 to prevent the ingress or egress of contaminants. In a similar regard, the front side of the cylindrical enclosure 1711 is mounted to the housing 1502 with the mounting surface 1715 proximate the back side 1508 of the housing 1502. In order to prevent contaminant ingress between the housing 1502 and the cylindrical enclosure 1711, a front side seal 1727 is set in the front side seal groove 1717. The front lip 1716 is inserted into the second bore 1510 such that the front side seal 1727 engages the interior surface of the second bore 1510. In addition, a plurality of fasteners further secure the cylindrical enclosure 1711 to the housing 1502.

In the illustrated embodiment, one end of the rotor 1740 is supported in the motor housing 1710 by engaging the inner race of the bearing 1720. As shown in Figs. 17 and 18, the rotor 1740 further defines a tapered bore 1740 for receiving a corresponding tarped end 1621 of a ball screw 1620. In the illustrated embodiment, the ball screw 1620 has a threaded bore 1622 for receiving a threaded fastener 1760. When threaded into the ball screw 1620, the threaded fastener 1760 passes through a washer 1770 and then through the opening in the bearing 1720. The threaded fastener 1760 is then threaded into the threaded bore 1622 of the ball screw 1620 and thus is also passes through the center of the rotor 1740. As shown in Figs. 17 and 18, the fastener 1760 includes a tapered head 1762 that engages a mating tapered surface 1772 on the washer 1770. The fit between these mating tapers is such that contact between the surfaces initiates at a point near the base of the head toward the threaded section of the fastener 1760. As the fastener is drawn into contact with the washer, the tapered surfaces come together though the stress distribution along the taper interface is higher toward the threaded end. This "oil can" effect creates a non-uniform load and stress distribution along the taper interface. This non-uniform stress distribution at the head end of the fastener causes the resultant preload forces acting on the connection to be applied toward the threads of the fastener, rather than concentrated at the fastener/washer interface. By shifting the preload forces into the threads, the integrity of the connection is maintained in response to repeated torsional impact loads from inertial forces during the many cyclic start/stop events as the plunger system is operated.

The clamping force provided by the threaded fastener 1760 compresses the washer 1770 against one side of the inner race of the bearing 1720 and urges the ball screw 1620 toward the second side of the bearing 1720. The tapered end 1621 of the ball screw 1620 frictionally engages the tapered bore 1741 of the rotor 1740, thus transferring a force that causes the rotor 1740 to frictionally engage the other side of the inner race of the bearing 1720. In one embodiment, this frictional fit is the primary torque driving mechanism between the rotor 1740 and the ball screw 1620. In this particular embodiment, the degree of frictional fit between the ball screw taper 1621 and mating taper bore 1741 of the rotor 1740 does not cause an expansion of the rotor hub that engages the inner race of the bearing. By preventing a radial preload of the inner race of the bearing, the fit of the rolling elements between the inner and outer races remains generally unchanged, thus reducing parasitic losses from increased frictional forces.

In an alternate embodiment, however, a bearing assembly having clearances sufficient to permit radial expansion of the inner race may be provided. In this embodiment, as the tapered end 1621 is drawn within the tapered bore 1741, a portion of the rotor 1740 that extends into the inner diameter of bearing 1720 may be displaced radially against the inner race of the bearing 1729. The added clearance in the bearing is taken up by radial expansion to provide a desired rolling element fit. Thus, the connection of the ball screw to rotor is further compressed to provide additional compressive stresses to resist torsional impact loads, experienced during operation, that resist loosening of the connection.

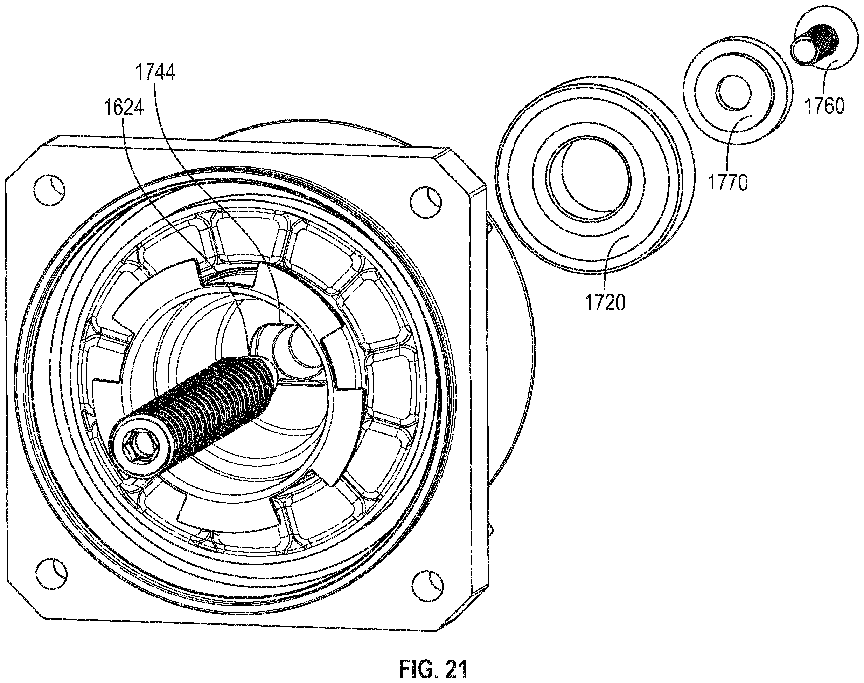

In addition, it is within the scope of the invention that the ball screw 1620 may have one or more flats 1624 adjacent or as part of the tapered end 1621, as shown in Fig. 21. The one or more flats 1624 correspond to one or more respective flats 1744 on the rotor 1740 surface. When assembled, the ball screw flats 1624 and rotor flats 1744 will be in an abutting or nearly abutting relationship. Thus, it is within the scope of the invention that a redundant torque transfer mechanism is provided between the rotor 1740 and the ball screw 1620, in the event of a loss of friction between the tapered surfaces (1621 and 1741). It is further within the scope of this invention that one of the above described torque transmission mechanisms can be provided without the other mechanism and retain the intended purpose and operation of the braking system 1500.

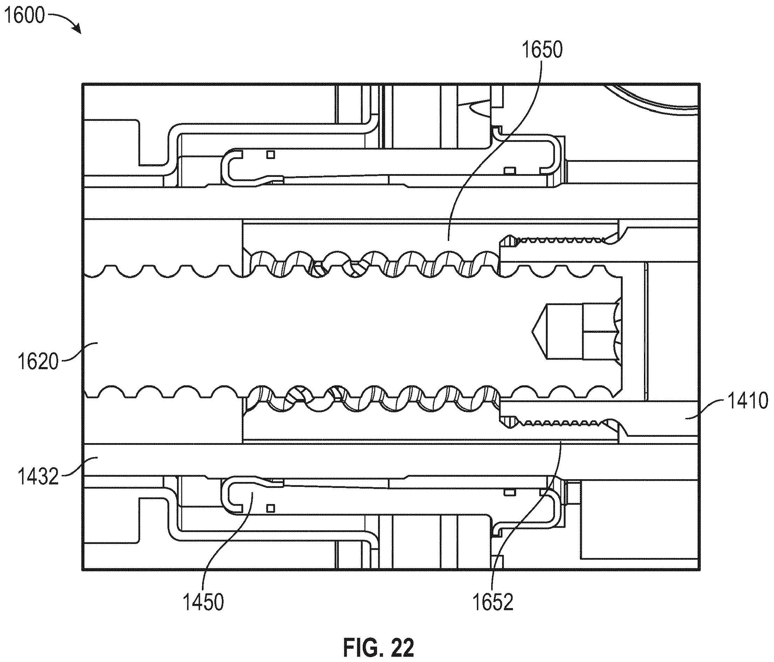

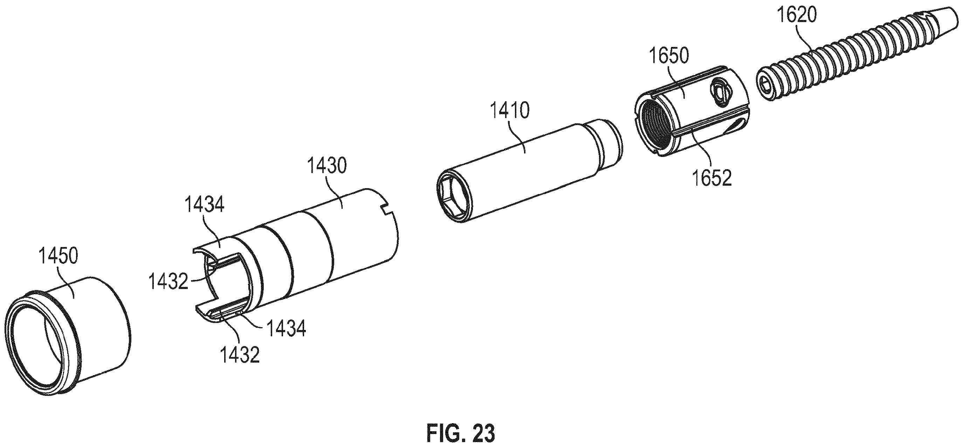

As shown in Fig. 22, the ball nut assembly 1600 further includes a ball nut 1650 with ball bearings that engage the ball screw 1620 in a manner known to those skilled in the art. For example, complementary grooves are formed on the inner surface of the ball nut 1650 bore which correspond to groove on the ball screw 1620. The ball bearings are located between the nut grooves and ball screw grooves, and as such engage both the screw 1620 and the ball nut 1650 and transfer torque there between. As best shown in Fig. 23, one end the ball nut 1650 includes a threaded end for receiving a portion of the plunger assembly 1400. Further, the outer circumferential surface of the ball nut 1650 can include one or grooves 1652 that correspond to one or more splines 1432 on an anti-rotation tube 1430.

As shown in Fig. 23, the illustrated plunger assembly 1400 is connected to the ball nut assembly 1600 by a rod 1410 with a threaded portion that is threaded into the threaded end of the ball nut 1650. In operation of the braking system 1500, rotational movement of the motor assembly 1700 is transferred to the ball screw 1620. The anti-rotation tube 1430 is provided between the housing 1502 and the ball nut 1650 to prevent rotational movement of the ball nut 1650 as a result of the rotational forces being transferred by the ball screw 1620. As shown in Figs. 22 and 23, the one or more splines 1432 on anti-rotation tube 1430 will engage the grooves 1652 on the ball nut 1650 to minimize relative rotation between the ball nut 1650 and portions of the plunger assembly connected to the housing to ensure the transfer of rotary to linear motion of the ball screw assembly. When the splines 1432 are inserted into the slots rotation of the ball screw 1620 causes the ball nut 1650 to translate axially along the ball screw 1620. In the illustrated embodiment, the anti-rotation tube 1430 defines the full length of travel of the ball nut 1650 and supports the ball nut 1650 over the full length of travel. As such, the anti-rotation tube 1430 provides substantial support the ball nut 1650 during actuation of the motor assembly 1700, allowing the braking system to be sufficiently radially supported with the use of only one bearing, such as bearing 1720. In one embodiment, bearing 1720 may be a four-point ball bearing. Alternatively, bearing 1720 may be a barrel or roller thrust bearing.

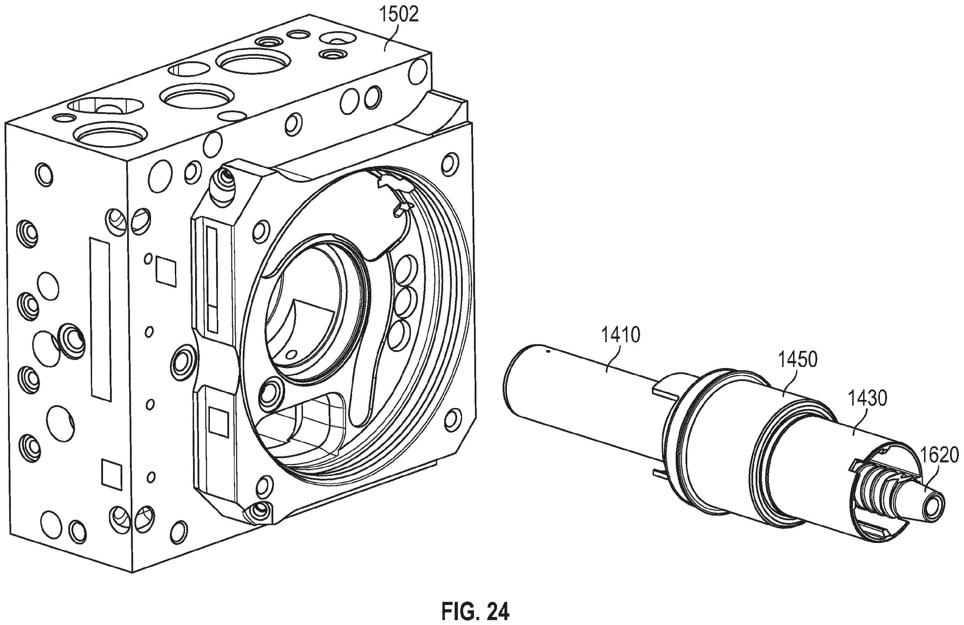

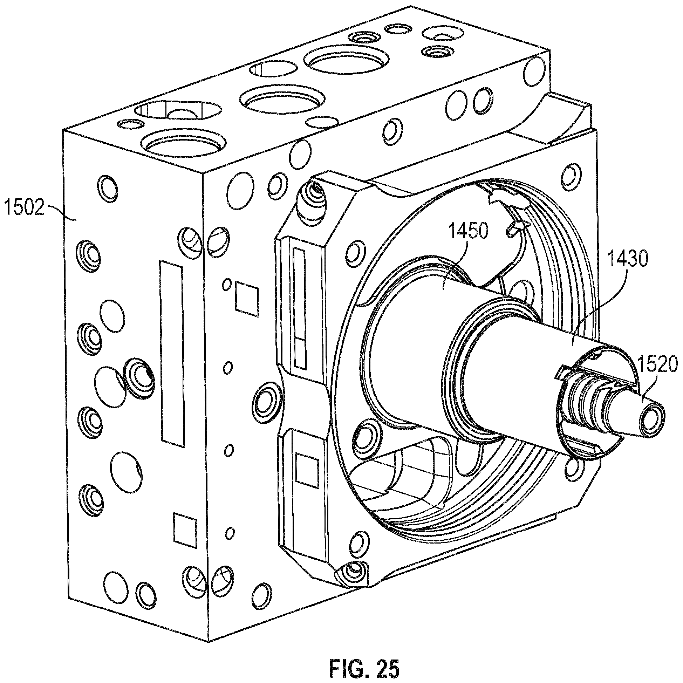

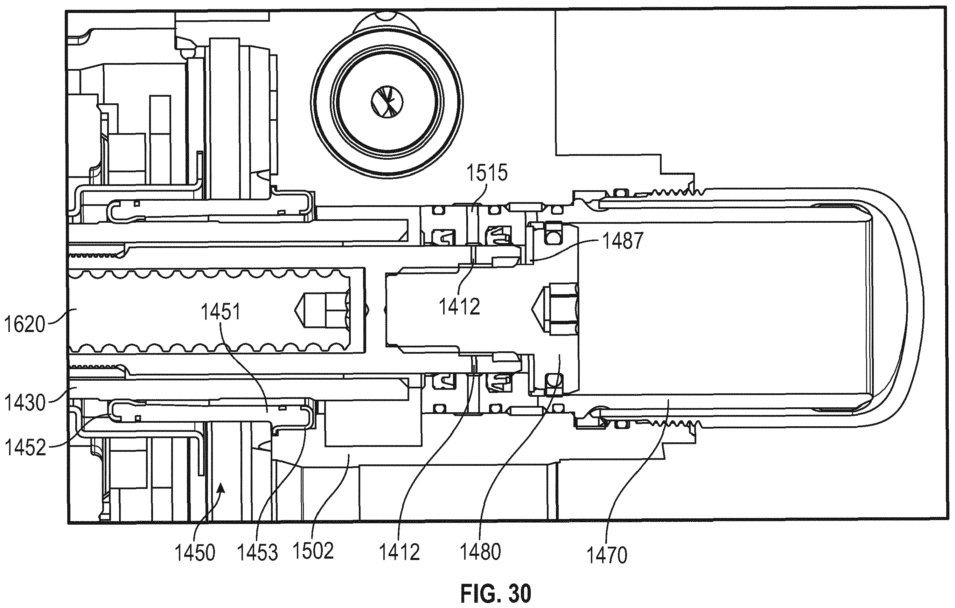

As shown in Fig. 24 and Fig. 25, the anti-rotation tube 1430 is supported on the housing 1502 by a torque coupler 1450. In the illustrated embodiment, the torque coupler 1450 is press fit or otherwise fixed into the housing 1502 and onto the outer surface of the anti-rotation tube 1430. Frictional engagement between the torque coupler 1450, the housing 1502, and the anti-rotation tube 1430 is sufficient to prevent rotational slipping between the components. As shown in Fig. 30, the torque coupler 1450 includes a center elastomer sleeve 1451 having metal rings 1452 and 1453 crimped to its ends.
The ring 1452 is press fit onto the anti-rotation tube 1430, and the ring 1453 is press fit in the housing 1502. Additional fasteners or fastening mechanisms can also be utilized in
the aforementioned friction connections without deviating from the scope of the invention. For example, the surface of the anti-rotation tube 1430 can be knurled to increase the frictional engagement with the torque coupler 1450. The torque coupler 1450 is formed from a material with elastic properties such that the torque coupler 1450 can deflect torsionally about the axis of rotation of the ball screw 1620. In one embodiment, the torque coupler material may be a synthetic rubber and, in particular, may be an EPDM rubber material. In addition, the torque coupler 1450 accommodates torsional movement, and thus provides torsional isolation, of the anti-rotation tube 1430 relative to the housing 1502 in both the clockwise and counter-clockwise directions. The elastic deflection of the torque coupler 1450 in the rotational direction provides isolation and damping of torsional load spikes when the motor assembly 1700 begins rotation from a stopped position or reverses the direction of rotation, as the moment of inertia of the braking system 1500 components will result in higher torsional strains on the system. During such situations, the elastic deflection of the torque coupler 1450 will absorb spikes in shear strain, while also deflecting back to its normal operating position after the initial acceleration of the of the motor assembly 1700. In a similar regard, the torque coupler 1450 can absorb shock forces that move the anti-rotation tube 1430 out of axial alignment with the ball nut 1650, but then return the anti-rotation tube 1430 to the correct position due to the elastic properties of the torque coupler 1450.

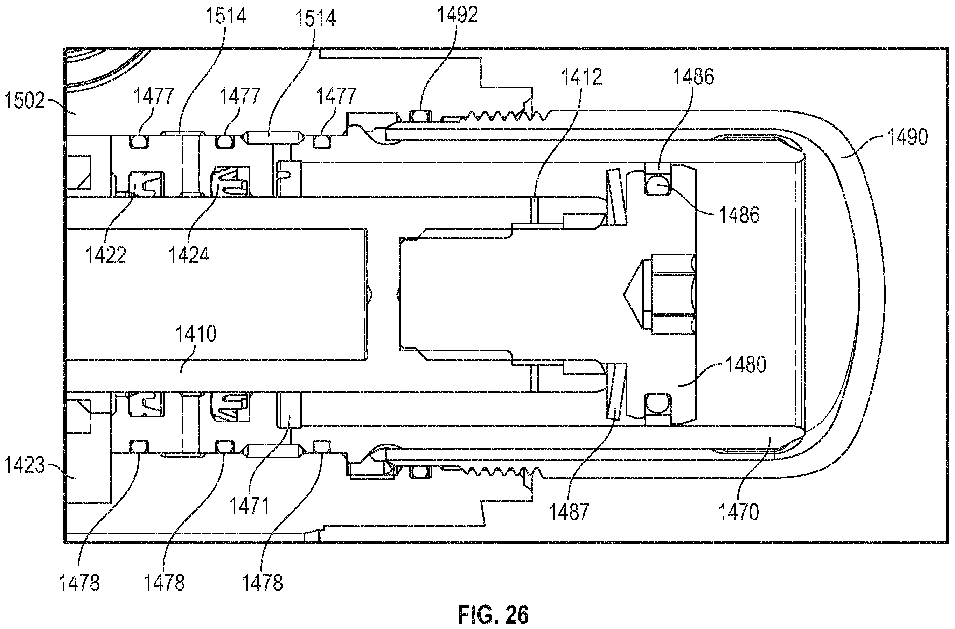

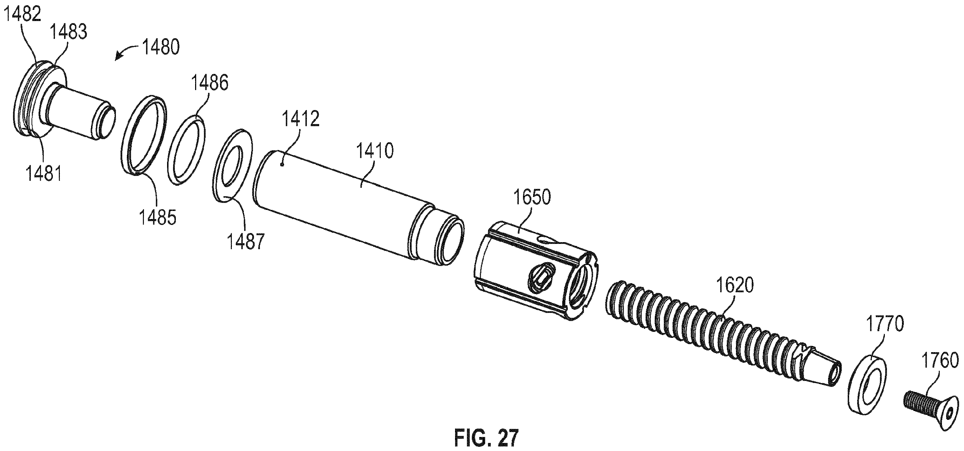

The rod 1410 is further provided with a threaded bore at one end that corresponds with a threaded end on a plunger head 1480 as shown in Fig. 26 and Fig. 27. While the illustrated embodiment describes a threaded connection between the plunger head 1480 and the rod 1410, it is within the scope of the invention that other fastening mechanisms can be employed without deviating from the scope of the invention. It is further within the scope of the invention that the rod 1410 and plunger head 1480 can alternately be formed as one continuous part. As illustrated in FIG. 26, the plunger head 1480 also defines a widened portion with a plunger head groove 1481 extending circumferentially around. A plunger head seal 1485, such as an energized Teflon seal
1485 shown in the illustrated embodiment, is seated within the plunger head groove 1481 and abuts the interior surface of a sleeve 1470. While described as a Teflon seal, the plunger head seal 1485 may be any material or configuration that provides a generally low coefficient of friction contact during relative motion of the plunger head 1480 relative to the bore it is received within. The illustrated embodiment further includes a plunger head O-ring 1486 between the energized Teflon seal 1485 and the bottom of the plunger head groove 1481. The plunger head O-ring 1486 acts as a resilient support member beneath the energized Teflon seal 1485, such that the energized Teflon seal 1485 is urged in a radially outward direction. The energized Teflon seal 1485 and O-ring 1486 combination acts as a resilient member that radially positions and supports plunger head 1480 within a bore in sleeve 1470. However, it is within the scope of the invention that the O-ring 1486 can be incorporated into the energized Teflon seal 1485 while providing the same positioning characteristics described above.

The implementation of the energized Teflon seal 1485 provides support to the plunger head 1480, particularly in the extended position, by acting as a bearing surface. Thus, the embodied braking system 1100 requires only one bearing 1720 located generally opposite the plunger head 1480. However, it is within in the scope of the invention that two or more bearings can be used within the plunger assembly 1400. In addition, the circumferential surfaces located on the front 1482 and back 1483 of the plunger head groove 1481 may be stepped to such that the front surface 1482 is of a greater or smaller diameter relative to the back surface 1483. The stepped design allows for controlled deformation of the energized Teflon seal 1485 while preventing extrusion of the seal in either the forward or reward direction. In addition, the energized Teflon seal 1485 can be readily installed onto the plunger head 1480 by slipping the energized Teflon seal 1485 over the small diameter surface.

The plunger assembly 1400 can further comprise a crash washer 1487, for example a spring washer, Bellville washer, or other resilient member, seated between the plunger head 1480 and the rod 1410. In an actuated position, for example the position shown in FIG. 26, the crash washer 1487 is in a non-deflected state. In the event of a brake system failure or power loss scenario during retraction of the plunger assembly 1400, the inertia of the plunger assembly 1400 may continue in the retracting direction. While the viscosity of the fluid being forced through the system can reduce or stop this inertial movement, additional measures may be needed to prevent the plunger assembly from damaging components if the plunger head contacts a hard-stop surface. Thus, the arraignment of crash washer 1487 allows it to engage a sleeve park position surface 1471 before the plunger head 1480, causing the crash washer 1487 to deflect and absorb the inertial forces, as shown in Fig. 30.

In an embodiment, the crash washer 1487 can be used to determine the park position of the plunger. For example, when the crash washer 1487 abuts a surface of the housing 1502 or a surface connected to the housing 1502, the motor assembly 1700 will experience increased current or power draw due to the spring forces of the crash washer. Various electrical, software, and or electromechanical means can be used to detect the increased current or power draw to signal the braking system that the plunger assembly 1400 is in the parked position. In Fig. 30, the plunger assembly 1400 is illustrated in a position wherein the crash washer 1487 is in a fully deflected state between the plunger head 1480 and the sleeve 1470. The position of the plunger assembly 1400 in Fig. 30 can also illustrate a park position of the plunger assembly 1400 when no pressure is applied by the braking system 1500.

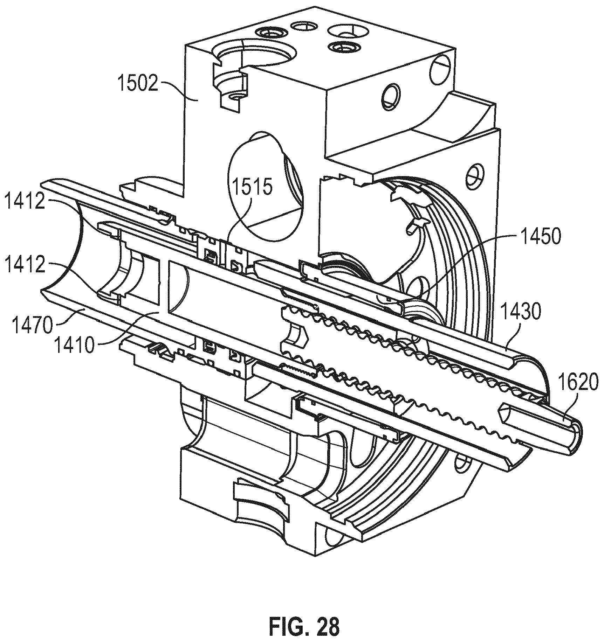

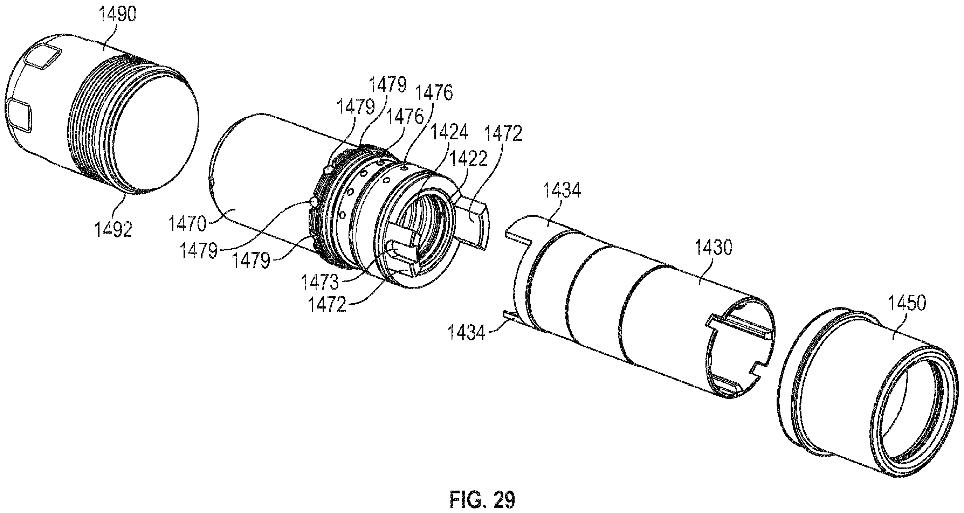

As shown in FIG. 28, the sleeve 1470 is located within the second bore 1510 of the housing 1502 but extends beyond the length of the second bore 1510. As further illustrated in FIG. 29, the one or more tabs 1472 of the sleeve form an interlocking connection with the tabs 1434 of the anti-rotation tube. The interlocking connection may accommodate various degrees of relative motion between the sleeve 1470 and the anti-rotation tube 1430, from a loose fit, where no contact is made when the torque coupler 1450 is operable, to a contacting fit that permits relative torsional movement and provides limits to the torsional deflections of the torque coupler 1450 during operation. The tolerances between the anti-rotation tube tabs 1434 and the sleeve tabs 1472 will allow for some rotational movement of the anti-rotation tube 1430, due to the elastic properties of the torque coupler 1450, without coming into contact with each other. It is also within the scope of the invention that the tolerances between the anti- rotation tube tabs 1434 and the sleeve tabs 1472 are such that rotation of the anti-rotation tube 1430 is limited by the respective tabs coming into contact with one another. In another embodiment, one set or both sets of the interconnecting tabs 1434 and 1472 may be coated with a resilient material in order to provide a secondary cushioning effect when contact of the tabs 1434 and 1472 may occur.

In addition, a pin 1475 is secured to the housing 1502 such that one end is inserted into an aperture in the housing and the other end of the pin is disposed in a detent 1473 in at least one of the sleeve tabs 1472 or in the sleeve 1470. During assembly, the pin 1475 aligns a series of sleeve apertures 1476, shown in Fig. 29, the purpose of which is further discussed below, to the upright position. After assembly, the pin 1475 functions as a fail-safe mechanism in the event that the sleeve 1470, anti-rotation tube 1430, or torque coupler 1450 decouple from the housing 1502. In such an event, the pin 1475 would maintain the position of the sleeve 1470 relative to the housing 1502 and the interlocking connection between the anti-rotation tube tabs 1434 and the sleeve tabs 1472 will resist rotational movement of the anti-rotation tube.

As best shown in Fig. 26, grooves 1477, illustrated as three grooves though more or fewer may be used, are defined on the outer circumferential surface of the sleeve 1470, each holding seal 1478, such as an O-ring seal 1478. The sleeve 1470 is inserted into the housing 1502 such that the three or more O-ring seals 1478 engage an inner surface of the housing second bore 1510. As illustrated in Fig. 29, the sleeve can further comprise the series of apertures 1476 located between the three or more O-ring seals 1478. When the sleeve 1478 is located within the housing bore, the O-rings 1478 will establish hydraulically separated volumes 1514 as illustrated in Fig. 26. Further, the apertures located between the O-rings 1478 allow fluid to flow between an inner diameter of the sleeve 1470 and an outer diameter of the sleeve 1470. Thus, selective fluid communication can occur between a source of fluid at or near the center of the plunger assembly and a passageway extending from the housing second bore 1510 of the housing 1502 by a moveable aperture or passageway, as will be described below.

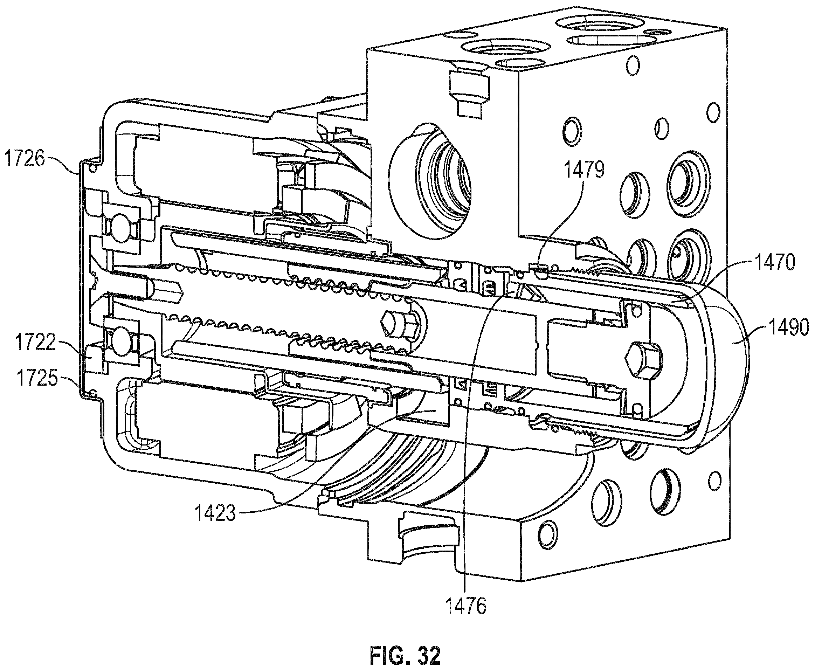

As illustrated in Fig. 26, the sleeve 1470 comprises a bore with a diameter sized to correspond to the diameter of the rod 1410. The sleeve bore also defines two circumferential grooves in which an "L" shaped seal 1422 and "E" shaped seal 1424 are seated within. When the rod 1410 and plunger head 1480 are positioned in the sleeve 1470 bore, as illustrated in Fig. 27, the "L" shaped seal 1422 and "E" shaped seal 1424 abut the outer diameter of the rod 1410. The abutting connection is such that the rod 1410 and plunger head 1480 can freely move forward and backward relative to the sleeve 1470, but also establishes hydraulically separate spaces. The space located between the energized Teflon seal and the "E" shaped seal 1424 establishes the second pressure chamber. The passageway 1423 between the "E" shaped 1424 seal and the "L" shaped seal 1422 establish a flow path for fluid leaving rod flow metering cross holes 1412 in the rod 1410. The area behind the "L" shaped 1422 seal is generally intended to be free of fluid, but the illustrated embodiment further comprises a drip chamber or drip path 1423, shown in Fig. 32, for the collection of any fluid due to weepage around the "L" shaped seal 1422.

As shown in Fig. 30, the illustrated rod flow metering cross holes 1412 allow venting of the brakes to the reservoir in boost mode. In slip control, it allows the release of pressure by pulling the plunger back to vent to the reservoir without the need for dump valve actuation. In addition, the rod flow metering cross holes 1412 allow fluid to flow between the park position relief conduit 1515 and the second pressure chamber. When the plunger assembly 1400 is advanced and retracted to supply pressurized fluid to the system, differences between the actual plunger assembly position and the computed plunger assembly position can arise. Thus, it is important to reestablish the park position to prevent over extension or retraction of the plunger assembly. In reestablishing the park position, the braking system 1500 can retract the plunger assembly 1400 back towards the park position. When the correct positioning is arrived at, the rod flow metering cross holes 1412 will align with the park position relief conduit 1515. As a result, the pressure in the second chamber will decrease, which can be detected by the braking system 1500 by either fluid flow or pressure change, and the system will stop the retraction of the plunger assembly 1400 and set the current position as the park position. Another advantage of the rod flow metering cross holes 1412 aligning with the park position relief conduit 1515 arises when a boosted braking event has completed and it is desired for the wheel brakes to be unactuated. While the built up pressure in the braking system 1500 could be relieved by actuation of the dump valves.

In order to enclose the opening provided by the second bore 1510 in the housing 1502, an end cap 1490 is secured to the end cap mount 1511. In the illustrated embodiment, the end cap 1490 is a generally hollow cylindrical device with an open threaded end. When secured to the housing, a threaded end of the end cap 1490 engages the end cap mount 1511. Further, an end cap seal 1492 can be placed between the end cap 1490 and the housing 1502 to prevent the ingress of contaminants and egress of fluid. As shown in Figs. 26 and 30, the inner bore diameter of the end cap 1490 is greater than the outer diameter of the sleeve 1470. In operation, fluid is allowed to pass between the sleeve 1470 and the end cap 1490, such that the end cap 1490 acts as a pressure barrel chamber for the braking system. Thus, the co-axial positioning of the end cap 1490 and the sleeve 1470 cooperates to create a fluid pathway to the first pressure chamber without the need for additional conduits or passageways.

As shown in FIG. 32, flow slots 1479 in the sleeve 1470 allow fluid to flow from the first pressure chamber to a conduit or from a conduit to the first pressure chamber. In the illustrated embodiment, the flow slots 1479 are evenly spaced about the circumference of sleeve 1470 to improve flow in the first pressure chamber. However, it is also within the scope of invention that the flow slots 1479 can be located on only a portion of the sleeve 1470. For example, locating the flow slots 1479 or a single larger opening at the top of the sleeve 1470 would aid in the bleeding the braking system 1500 of fluid during a maintenance procedure.

## Claims

1. A plunger assembly for a vehicle brake system, the plunger assembly operable as a pressure source to control brake fluid pressure supplied to one or more wheel brakes, the plunger assembly comprising:
a housing defining a cylinder having a first port;
a reversible motor supported by the housing and having a motor case and a rotor, and including a bearing for at least in part supporting the rotor relative to the motor case;
a linear actuator driven by the motor, including ball screw mechanism including a screw and a nut, one of the screw and the nut defining a rotatable component connected to the motor rotor, and the other one of the screw and the nut defining a translatable component;
a plunger head mounted in the cylinder and driven by the translatable component in first and second opposite directions, the plunger head cooperating with the cylinder to define a first chamber containing brake fluid received from a fluid reservoir, wherein the first chamber is hydraulically connected to the wheel brakes via the first port, and wherein in at least one operating mode fluid pressure in the first chamber is increased when the plunger head is moved in the first direction and is decreased when the plunger head is moved in the second direction,
wherein a clamped connection is provided at an inner race of the bearing for securing the rotor to the rotatable component.

2. The plunger assembly according to claim 1 wherein the clamped connection includes a washer having a tapered aperture and a threaded fastener have tapered head and a threaded portion extending from the tapered head, the mating tapered aperture and tapered head defining a taper interface, the taper interface establishing an initial contact point proximate the threaded portion and a gap at a distal end of the tapered head.

3. The plunger assembly according to claims 1 to 2 wherein the rotor defines a tapered aperture and the rotatable component defines a complementary tapered extension and wherein the clamped connection engages the extension within the aperture to create a frictional torque transmitting connection.

4. The plunger assembly according to claim 1 to 3 wherein the rotor further defines a second aperture that is concentric with the tapered aperture and defining a torque transmitting profile and the rotatable component having a mating torque transmitting profile configured to provide a secondary torque transmission path between the rotor and the rotatable component.

5. The plunger assembly of claim 4 wherein the rotor torque transmitting profile and the rotatable component mating torque transmitting profile are flat surfaces.

6. The plunger assembly according to claim 1 wherein the clamped connection includes a washer engaging one side of the inner race, the rotor engages the opposite side of the inner race, and a threaded faster extends through the washer and is tightened into a threaded bore in the rotatable component to clamp the rotor to the inner race.

7. The plunger assembly according to claims 1 to 6 wherein the rotatable component is the screw.

8. A plunger assembly for a vehicle brake system, the plunger assembly operable as a pressure source to control brake fluid pressure supplied to one or more wheel brakes, the plunger assembly comprising:
a housing defining a cylinder having a first port;
a reversible motor supported by the housing;
a linear actuator driven by the motor;
a plunger head mounted in the cylinder and driven by the actuator in first and second opposite directions, the plunger head cooperating with the cylinder to define a first chamber containing brake fluid received from a fluid reservoir, the plunger head further including a seal for sealingly engaging the the cylinder, wherein the first chamber is hydraulically connected to the wheel brakes via the first port, and wherein in at least one operating mode fluid pressure in the first chamber is increased when the plunger head is moved in the first direction and is decreased when the plunger head is moved in the second direction,
wherein the plunger head seal includes an outer sealing ring radially biased against an inner cylinder wall for radially positioning the plunger head within the cylinder.
